(19) Europäisches Patentamt
European Patent Office
Office européen des brevets

(11) **EP 3 789 743 B1**

(12) **EUROPÄISCHE PATENTSCHRIFT**

(45) Veröffentlichungstag und Bekanntmachung des Hinweises auf die Patenterteilung:
**17.07.2024   Patentblatt 2024/29**

(21) Anmeldenummer: **19195961.8**

(22) Anmeldetag: **06.09.2019**

(51) Internationale Patentklassifikation (IPC):
*G01J 5/22* (2006.01)       *G01K 13/00* (2021.01)
*G01K 7/42* (2006.01)       *G01J 5/02* (2022.01)
*G01J 5/00* (2022.01)       *G01J 5/20* (2006.01)
*G01J 5/03* (2022.01)

(52) Gemeinsame Patentklassifikation (CPC):
**G01J 5/026; G01J 5/03; G01J 5/22;**
G01J 2005/0077; G01J 2005/202

(54) **SYSTEM UND VERFAHREN ZUM ERZEUGEN EINES PRÄDIKTIONSSIGNALS SOWIE EINE WÄRMEBILDKAMERA**

SYSTEM AND METHOD FOR GENERATING A PREDICTION SIGNAL AND A THERMAL IMAGING CAMERA

SYSTÈME ET PROCÉDÉ DE GÉNÉRATION D'UN SIGNAL DE PRÉDICTION AINSI QUE CAMÉRA THERMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**10.03.2021   Patentblatt 2021/10**

(73) Patentinhaber: **Basler AG**
**22926 Ahrensburg (DE)**

(72) Erfinder: **WINGERT, Julian**
**25421 Pinneberg (DE)**

(74) Vertreter: **Bird & Bird LLP - Hamburg**
**Am Sandtorkai 50**
**20457 Hamburg (DE)**

(56) Entgegenhaltungen:
EP-A2- 0 964 231       DE-A1- 3 605 501
US-A- 4 727 500       US-A1- 2002 003 832
US-A1- 2008 302 956       US-A1- 2016 044 306

**EP 3 789 743 B1**

**Beschreibung**

Die Erfindung betrifft ein System und ein Verfahren zum Erzeugen eines Prädiktionssignals sowie eine Wärmebildkamera.

Aus dem Stand der Technik sind Wärmebildkameras bekannt. Mittels einer Wärmebildkamera kann Infrarotstrahlung erfasst werden und ein Wärmebild basierend auf der erfassten Infrarotstrahlung erzeugt werden. Der Wellenlängenbereich der Infrarotstrahlung ist vorzugsweise zwischen 3 Mikrometer und 20 Mikrometer. Wärmebildkameras werden oftmals dazu verwendet, um die Temperaturen eines Objekts oder eines Umgebungsbereichs bildlich darzustellen.

Um die Infrarotstrahlung erfassen zu können, werden für Wärmebildkameras oftmals bolometrische Detektorarray verwendet. Das Detektorarray weist eine Vielzahl von bolometrischen Messzellen auf. Das Detektorarray kann auch als Messfeld mit einer Vielzahl von bolometrischen Messzellen verstanden werden. Jede bolometrische Messzelle ist zur Erfassung von Infrarotstrahlung ausgebildet. Insbesondere ist jede Messzelle zur Erfassung von Infrarotstrahlung im Wellenlängenbereich des Nah-, Mittel- und/oder Ferninfrarots ausgebildet. So kann es beispielsweise vorgesehen sein, dass jede bolometrische Messzelle Infrarotstrahlung im Wellenlängenbereich von 3 Mikrometer und 20 Mikrometer erfassen kann. Jede bolometrische Messzelle kann also nach Art eines bolometrischen Sensors zur Erfassung von Infrarotstrahlung ausgebildet sein. Das Messprinzip kann sich dabei auf die Absorption von Infrarotstrahlung und der Erwärmung der bolometrischen Messzelle beziehen. Jede bolometrische Messzelle weist deshalb eine thermische Kapazität auf. Die thermische Kapazität repräsentiert einen Wert für die Menge an thermischer Energie, die von der jeweiligen bolometrischen Messzelle gespeichert werden kann. Jede bolometrische Messzelle ist außerdem durch einen thermischen Widerstand charakterisiert. Der thermische Widerstand der jeweiligen Messzelle ist ein Wärmekennwert und/oder ein Maß für die Temperaturdifferenz, die in der jeweiligen Messzelle beim hindurchtreten eines Wärmestroms entsteht. Aufgrund des thermischen Widerstands und der thermischen Kapazität ist jede bolometrische Messzelle als ein Verzögerungsglied mit einer Zeitkonstante ausgebildet. Die Zeitverzögerung bezieht sich dabei auf die Zeitverzögerung des von der jeweiligen Messzelle erzeugten Messsignals und/oder Messwerts in Bezug zu der auf die jeweilige Messzelle eintreffenden und zu messenden Infrarotstrahlung. Vereinfacht gesprochen kann eine bolometrische Messzelle eine gewisse Messträgheit gegenüber einer sich in ihrer Intensität und/oder Wellenlänge ändernden Infrarotstrahlung aufweisen.

Die Publikation EP 0 964 231 A2 betrifft ein Infrarot-Thermometer zur kontaktlosen Temperaturerfassung eines Objekts. Die Publikation DE 3605501 A1 betrifft ein elektronisches Fieberthermometer. Die Publikation US 4,727,500 betrifft ein elektronisches Thermometer. Die Publikation US 2002/0003832 A1 betrifft ein Verfahren und eine Vorrichtung zur Vorhersage der Temperatur eines Objekts durch eine Sensormessung einer Objekttemperatur unter Verwendung eines Prozessors mit einem Finite-Impulse-Antwort Filter. Die Publikation US 2016/0044306 A1 betrifft ein Verfahren zur Offsetkorrektur in einem Bildgebungssystem. Die Publikation US 2008/0302956 A1 betrifft ein Verfahren zur Steuerung der Offsetkompensation für ein Infrarot Bildgebungssystem.

Der Erfindung liegt deshalb die Aufgabe zugrunde, ein System und ein Verfahren bereitzustellen, das eine schnelle Erzeugung eines Messsignals und/oder Messwertes erlaubt, das die erfassbare Infrarotstrahlung quantitativ besonders gut repräsentiert. Darüber hinaus ist eine Wärmebildkamera wünschenswert, die die genannte Aufgabe in analoger Weise erfüllt.

Gemäß einem ersten Aspekt wird die genannte Aufgabe gelöst durch ein System mit den Merkmalen des Anspruchs 1. Vorgesehen ist also ein System zum Erzeugen eines Prädiktionssignals. Das System weist ein bolometrisches Detektorarray mit einer Vielzahl von bolometrischen Messzellen auf. Außerdem weist das System eine Prädiktionseinheit auf. Jede bolometrische Messzelle ist zur Erfassung von Infrarotstrahlung ausgebildet. Außerdem ist jede bolometrische Messzelle als ein Verzögerungsglied mit einer Zeitkonstante ausgebildet, die durch einen thermischen Widerstand der jeweiligen Messzelle und einer thermischen Kapazität der jeweiligen Messzelle bestimmt ist, so dass jeder von der jeweiligen Messzelle erzeugte Messwert zeitverzögert zu einer in ihrer Intensität und/oder Wellenlänge variierenden zu Infrarotstrahlung ist. Das Detektorarray ist ausgebildet, an zeitlich aufeinander folgenden Messzeitpunkten jeweils einen Messdatensatz zu erzeugen, der die Messwerte der Messzellen zum jeweiligen Messzeitpunkt repräsentiert. Das System ist ausgebildet, die Messdatensätze zeitlich aufeinander folgend an die Prädiktionseinheit zu übertragen. Die Prädiktionseinheit ist ausgebildet, für jeden empfangenen Messdatensatz einen Differenzdatensatz zu ermitteln, der die Messwertdifferenz der Messwerte zwischen dem jeweiligen empfangenen Messdatensatz und dem zeitlich zuvor empfangenen Messdatensatz repräsentiert. Die Prädiktionseinheit ist außerdem ausgebildet, für jeden empfangenen Messdatensatz einen Prädiktionsdatensatz basierend auf dem dadurch ermittelten Differenzdatensatz und einer die Messzellen repräsentierende Kenngröße derart zu ermitteln, dass der jeweilige Prädiktionsdatensatz für jeden Messwert des jeweiligen empfangenen Messdatensatzes einen die Zeitverzögerung kompensierten Vorhersagewert repräsentiert. Die Prädiktionseinheit ist ausgebildet, ein Prädiktionssignal zu erzeugen, das die zeitlich aufeinander ermittelten Prädiktionsdatensätze repräsentiert.

Bezüglich des Detektorarrays und der Messzellen wird auf die eingangs wiedergegebenen Erläuterungen in analoger Weise Bezug genommen. Das Detektorarray weist also eine Vielzahl von bolometrischen Messzellen auf. Diese Vielzahl kann die gesamte Anzahl der bolometrischen Messzellen des Detektorarrays bilden und/oder sein. Jedoch ist es auch möglich, dass die Vielzahl von bolometrischen Messzellen des Detektorarrays eine Teilmenge aller bolometrischen Messzellen des Detektorarrays bildet und/oder ist. Dies kann beispielsweise dann der Fall sein, wenn mindestens eine Messzelle oder mehrere Messzellen des Detektorarrays nicht funktionsfähig sind. Diese Messzellen können auch als tote Messzellen bezeichnet sein. Die übrigen, nicht toten Messzellen des Detektorarrays können die genannte Vielzahl der Messzellen des Detektorarrays bilden. Jedoch kann auch eine andere vorbestimmte Untermenge der gesamten Messzellen die genannte Vielzahl der Messzellen des Detektorarrays bilden. Wenn im Folgenden auf eine bolometrischen Messzelle des Detektorarrays Bezug genommen wird, ist damit vorzugsweise eine Messzelle und/oder jede der Messzellen der genannten Vielzahl der Messzellen des Detektorarrays gemeint. Das Detektorarray kann beispielsweise mehr als 100 bolometrische Messzellen, vorzugsweise mehr als 1000 bolometrische Messzellen aufweisen. Jede bolometrische Messzelle der Vielzahl der Messzellen des Detektorarrays ist als ein Verzögerungsglied mit einer Zeitkonstante ausgebildet. Somit kann jede bolometrische Messzelle der genannten Vielzahl der Messzellen des Detektorarrays als ein Verzögerungsglied erster Ordnung ausgebildet sein. Dies gilt zumindest bei einer vereinfachten Betrachtung der jeweiligen Messzelle. Grundsätzlich ist es jedoch auch möglich, dass jede bolometrische Messzelle als ein Verzögerungsglied einer höheren Ordnung ausgebildet ist. Bevorzugt wird jedoch ein Verzögerungsglied erster Ordnung für die jeweilige Messzelle betrachtet. Die Verzögerung tritt zwischen dem Auftreten einer Intensitätsänderung der Infrarotstrahlung an der Messzelle und dem von der jeweiligen Messzelle erzeugten Messwert auf. Jeder von der jeweiligen Messzelle erzeugter Messwert ist deshalb zeitverzögert. Die Zeitkonstante eines Verzögerungsglieds beschreibt hierbei die charakteristische Verzögerung. Die Zeitkonstante einer jeweiligen Messzelle kann beispielsweise durch das Produkt aus dem thermischen Widerstand der jeweiligen Messzelle und der thermischen Kapazität der jeweiligen Messzelle bestimmt sein.

Bevorzugt ist es vorgesehen, dass die Messwerte der Messzelle an zeitlich aufeinander folgenden Messzeitpunkten erfasst werden. So können die Messwerte der Messzellen beispielsweise mit einer Abtastfrequenz von beispielsweise 50 Hz erfasst werden. Das Detektorarray ist dafür ausgebildet, an zeitlich aufeinander folgenden Messzeitpunkten jeweils einen Messdatensatz zu erzeugen, der die Messwerte der Messzellen zum jeweiligen Messzeitpunkt repräsentiert. Die Messdatensätze werden also ebenfalls in einer Frequenz mit insbesondere 50 Hz erzeugt. Das System ist ausgebildet, die Messdatensätze zeitlich aufeinander folgend an die Prädiktionseinheit zu übertragen. Zwischen dem Detektorarray und der Prädiktionseinheit kann deshalb eine Signalverbindung bestehen, die zur Übertragung eines Signals ausgebildet ist, das die zeitlich aufeinander folgenden Messdatensätze repräsentiert. Somit können die Messdatensätze mittels der Signalverbindung von dem Detektorarray nacheinander an die Prädiktionseinheit übertragen werden.

Der grundsätzliche Verlauf einer Sprungantwort eines Verzögerungsglieds, insbesondere eines Verzögerungsglieds erster Ordnung, ist bekannt. Wird beispielhaft angenommen, dass eine bolometrische Messzelle durch eine Infrarotstrahlung beaufschlagt wird, die einen sprunghaften Verlauf aufweist, so können die zeitlich aufeinander folgenden Messwerte der bolometrische Messzelle vorausgesagt werden, die den charakteristischen Verlauf einer Sprungantwort eines Verzögerungsglieds, insbesondere eines Verzögerungsglieds erster Ordnung, aufzeigen. Aufgrund dieser Kenntnis ist es möglich, dass die ersten beiden Messwerte in Reaktion auf die Sprungantwort verwendet werden, um basierend hierauf eine Voraussage über den aktuellen Messwert zu machen. Praxisnah wird oftmals davon ausgegangen, dass nach dem Fünffachen der Zeitkonstante des Verzögerungsglieds bzw. der bolometrischen Messzelle ein Messwert vorherrscht, der bis auf kleine Abweichungen dem statischen und realen Messwertzustand als Reaktion auf den sprunghaften Anstieg der Infrarotstrahlung entspricht. Da der grundsätzliche Verlauf der Sprungantwort bekannt ist, kann bereits aus der Erkenntnis von zwei Messwerten eine Voraussage darüber getroffen werden, wie der Messwert nach dem Fünffachen der Zeitkonstante sein wird. Diese Überlegung wird im Folgenden genutzt, um zunächst einen Differenzdatensatz zwischen zwei Messdatensätzen zu ermitteln. Darüber hinaus kann vereinfacht betrachtet mit einer Kenngröße und dem Differenzdatensatz eine Voraussage darüber getroffen werden, welche Messwerte von den Messzellen nach dem Fünffachen der Zeitkonstante und/oder in einem eingeschwungenen Zustand bzw. in einem quasistatischen Zustand von den Messzellen erfasst werden. Dies würde unter normalen Umständen mindestens das Fünffache der Zeitkonstante benötigen. Diese Zeit ist in der Praxis jedoch oftmals zu lang, um darauf warten zu können. Darüber hinaus ist es oftmals so, dass die Infrarotstrahlung sich ändert, insbesondere in einem Zeitraum der Fünffachen Zeitkonstante. Es besteht deshalb mit bekannten Ansätzen kaum eine Möglichkeit, einen Messwert zu erzeugen, der zeitnah und quantitativ annähernd genau die tatsächliche Intensität der Infrarotstrahlung aufzeigt, der von einer bolometrischen Messzelle erfasst wird. Das erfindungsgemäße System nutzt deshalb die Erkenntnis von Zeitverzögerungsgliedern sowie von zwei aufeinander folgenden Messwerten, um eine Voraussage bzw. Prädiktion über einen Messwert zu erreichen, der die tatsächlich auf die Messzelle einwirkende Infrarotstrahlung quantitativ annähernd genau repräsentiert. Wie zuvor erläutert, ist das System dazu ausgebildet, die Messdatensätze von dem Detektorarray zeitlich aufeinander folgend an die Prädiktionseinheit zu übertragen. Die Prädiktionseinheit ist ausgebildet, für jeden empfangenen Messdatensatz einen Differenzdatensatz zu ermitteln, der die Messwertdifferenz der Messwerte zwischen dem jeweiligen empfangenen Messdatensatz und dem zeitlich zuvor empfangenen Messdatensatz repräsentiert. Der zeitlich zuvor empfangene Messdatensatz kann sich auf den unmittelbar zeitlich zuvor empfangenen Messdatensatz oder auf einen Messdatensatz von mehreren zeitlich zuvor empfangenen Messdatensätzen beziehen, vorzugsweise sofern diese oder dieser einen zeitlichen Abstand von weniger als das Fünffache oder Dreifache der Zeitkonstante zum jeweils empfangenen Messwertdatensatz haben. Wenn im Folgenden auf einen zuletzt empfangen Messdatensatz, einen zeitlich zuvor empfangen Datensatz oder eine ähnlich Formulierung Bezug genommen wird, kann sich dies also auf den unmittelbar zeitlich zuvor empfangenen Messdatensatz oder auf einen Messdatensatz von mehreren zeitlich zuvor empfangene Messdatensätzen beziehen. Entsprechendes gilt für Messwerte des jeweiligen Messdatensatzes. Der zuletzt empfangene Messdatensatz weist eine Mehrzahl von Messwerten auf, die jeweils von einer zugehörigen Messzelle erzeugt worden sind. Von diesen Messwerten werden vorzugsweise die Messwerte des zuvor empfangenen Messdatensatzes abgezogen, die von der gleichen, zugehörigen Messzelle erzeugt worden sind. Sind die Messdatensätze beispielsweise nach Art einer Matrix geordnet, so kann der Differenzdatensatz beispielsweise durch Matrix-Subtraktion des zuvor empfangenen Messdatensatzes von dem zuletzt empfangenen Messdatensatz erfolgen.

Jede Messzelle kann durch eine Kenngröße repräsentiert sein. Die Kenngröße kann ein fester Wert sein oder nach Art einer Formel bestimmt sein. Insbesondere kann die Messgröße durch die Zeitkonstante der jeweiligen Messzelle bestimmt sein oder zumindest davon abhängig bestimmt sein. Die Zeitkonstante einer jeweiligen Messzelle kann das Verzögerungsverhalten der jeweiligen Messzelle charakterisieren. Grundsätzlich können jedoch noch weitere Faktoren das Verzögerungsverhalten der jeweiligen Messzelle beeinflussen. Diese können konsolidiert in der Kenngröße vereint sein. Aus der Messwertdifferenz für eine jeweilige Messzelle und der Kenngröße der jeweiligen Messzelle kann deshalb eine Voraussage über den zu erreichenden Messwert getroffen werden, der in einem statischen Messzustand nach dem Fünffachen der Zeitkonstante von der jeweiligen Messzelle erzeugt werden würde. Da die Prädiktionseinheit ausgebildet ist, für jeden empfangenen Messdatensatz einen (neuen) Prädiktionsdatensatz zu ermitteln, und zwar basierend auf dem durch den jeweils zuletzt ermittelten Differenzdatensatz und der die Messzellen repräsentierenden Kenngröße, ist es möglich, dass mittels des Prädiktionsdatensatzes vorausgesagte Messwerte für die Messzellen schnell und quantitativ an den tatsächlich zu erwartenden Wert angenähert bereitgestellt werden, ohne darauf länger warten zu müssen. Um die durch den Prädiktionsdatensatz vorausgesagten Messwerte für weitere Anwendungen zur Verfügung zu stellen, ist die Prädiktionseinheit ausgebildet, ein Prädiktionssignal zu erzeugen, dass die zeitlich nacheinander ermittelten Prädiktionsdatensätze repräsentiert. Da für jeden Messdatensatz ein Differenzdatensatz und für jeden Differenzdatensatz ein Prädiktionsdatensatz ermittelt wird, ist es bevorzugt vorgesehen, dass die Prädiktionseinheit die Prädiktionsdatensätze mit der gleichen Frequenz ermittelt, wie die Messdatensätze an die Prädiktionseinheit übertragen werden.

Eine vorteilhafte Ausgestaltung des Systems zeichnet sich dadurch aus, dass die Zeitkonstante die Kenngröße ist oder dass die Kenngröße ein vorbestimmter und/oder auf der Zeitkonstante basierender Wert ist. Die Kenngröße kann für jede Messzelle gleich sein. Es ist jedoch auch möglich, dass die Kenngröße für jede Messzelle individuell vorbestimmt ist. In einem einfachen Fall weist das Detektorarray eine Vielzahl von bolometrischen Messzellen auf, die jeweils zumindest im Wesentlichen gleich ausgestaltet sind. In diesem Fall ist die Zeitkonstante für jede der Messzellen gleich. Damit kann auch die Kenngröße für jede Messzelle gleich sein. Dies gilt insbesondere dann, wenn die Kenngröße durch die Zeitkonstante basierend vorbestimmt ist. Es ist jedoch auch möglich, dass die jeweilige Kenngröße auf der Zeitkonstante basiert bestimmt ist oder sogar ein anderer vorbestimmter Wert die Kenngröße bestimmt.

Erfindungsgemäß zeichnet sich das System dadurch aus, dass die Prädiktionseinheit ausgebildet ist, für jeden empfangenen Messdatensatz den Prädiktionsdatensatz basierend auf den jeweiligen empfangenen Messdatensatz, dem dadurch ermittelten Differenzdatensatz und der Kenngröße zu ermitteln. Dies kann beispielhaft anhand der Messwerte für eine Messzelle erläutert werden. Basierend auf der Differenz zwischen dem aktuellen Messwert der Messzelle und dem zeitlich vorangegangenen Messwert der Messzelle kann eine abgeschätzte Voraussage darüber getroffen werden, welchen Wert der Messwert der Messzelle bei einer Sprungantwort annimmt. So ist es beispielsweise bekannt, dass die Sprungantwort in der Zeit zwischen Null und der Zeit, die der Zeitkonstante entspricht, einen etwaigen linearen Verlauf annimmt, so dass der Wert des Messwerts nach der Zeit, die der Zeitkonstante entspricht, ein Wert von 63,2 % des finalen, zu erwartenden statischen Werts der Sprungantwort bereits erreicht hat. Wenn also aus diesem linearen Verlauf bereits eine Aussage über den finalen, zu erwartenden statischen Wert voraussagbar ist, so ist dadurch eine Kenngröße basierend auf der Zeitkonstante erzeugbar, die unter Verwendung der Differenz zwischen den beiden Messwerten eine Aussage erlaubt, welchen Wert der statische Messwert annimmt nach dem Fünffachen der Zeitkonstante. Ist der Aufsetzpunkt der Sprungantwort nicht Null, sondern durch den vorherigen Messwert bestimmt, so kann dieser ebenfalls berücksichtig werden, um quantitativ den richtigen, zu erwartenden Messwert zu bestimmen. Die vorangegangenen Erläuterungen sind deshalb mit den Daten des jeweils empfangenen Messdatensatzes, dem dadurch ermittelten Differenzdatensatz und der Kenngröße möglich. Dies gilt insbesondere dann, wenn die Kenngröße durch die Zeitkonstante oder basierend auf der Zeitkonstanten bestimmt ist.

Erfindungsgemäß zeichnet sich das System dadurch aus, dass die Prädiktionseinheit ausgebildet ist, für jeden empfangenen Messdatensatz den jeweiligen Prädiktionsdatensatz derart zu ermitteln, dass der jeweilige Prädiktionsdatensatz für jeden Messwert des jeweiligen empfangenen Messdatensatzes einen die Zeitverzögerung kompensierenden Vorhersagewert repräsentiert. Die Vorhersagewerte können quantitativ die Messwerte der Messzelle des Detektorarrays repräsentieren, die die tatsächlich von den Messzellen erfasste Infrarotstrahlung, insbesondere die erfasste Intensität der Infrarotstrahlung, repräsentiert.

Eine vorteilhafte Ausgestaltung des Systems zeichnet sich dadurch aus, dass das Detektorarray ausgebildet ist, an den zeitlich aufeinander folgenden Messzeitpunkten mit einer Abtastfrequenz von mindestens 20 Hz jeweils einen Messdatensatz zu erzeugen, der die Messwerte der Messzellen zum jeweiligen Messzeitpunkt repräsentiert. Vorzugsweise werden zu jedem Messzeitpunkt die Messsignale der bolometrischen Messzelle abgetastet und basierend auf den abgetasteten Messwerten wird zu jedem Messzeitpunkt ein Messwertdatensatz erstellt. Hierzu kann das Detektorarray entsprechend ausgebildet sein. Jeder Messdatensatz repräsentiert deshalb vorzugsweise ein gemessenes Wärmebild bzw. die von dem Detektorarray tatsächlich erfasste Infrarotstrahlung. Bei einer Abtastfrequenz von 20 Hz können somit beispielsweise 20 Wärmebilder pro Sekunde erfasst und/oder ermittelt werden. Vorzugsweise werden die Prädiktionsdatensätze mit der gleichen Abtastfrequenz erzeugt. Jeder Prädiktionsdatensatz kann somit eine Vorhersage über das tatsächliche Wärmebild bzw. eine Vorhersage über die tatsächlich erfasste Infrarotstrahlung repräsentieren. Vorzugsweise ist die Abtastfrequenz größer als 20 Hz. So kann die Abtastfrequenz beispielsweise mindestens 30 Hz, mindestens 50 Hz oder mindestens 100 Hz sein. Gerade bei höheren Abtastfrequenzen ist das erfindungsgemäße System besonders vorteilhaft. Denn der lineare Anstieg einer Sprungantwort eines Verzögerungsglieds, insbesondere eines Verzögerungsglieds erster Ordnung, ist gerade dann vorteilhaft nutzbar, wenn ein sehr kurzes Zeitintervall der Sprungantwort berücksichtigt wird, das kleiner als die Zeitkonstante des Verzögerungsglieds bzw. der bolometrischen Messzelle sein kann. In diesem Fall können dadurch besonders schnelle Strahlungsänderungen prädiziert werden, die gewöhnlich nicht mehr von der Messzelle erfassbar wären.

Eine vorteilhafte Ausgestaltung des Systems zeichnet sich dadurch aus, dass die Prädiktionseinheit ausgebildet ist, für jeden empfangenen Messdatensatz $M_{t1}$ mit den Messwerten $(m_{1,t1}, m_{2,t1} .... m_{k,t1})$ einen Differenzdatensatz $D_{t1}$ mit den Messwertdifferenzen $(d_{1,t1}, d_{2,t1} .... d_{k,t1})$ durch Subtraktion der Messwerte $(m_{1,t0}, m_{2,t0} .... m_{k,t0})$ eines zuvor empfangenen Messdatensatzes $M_{t0}$ von den Messwerten $(m_{1,t1}, m_{2,t1} .... m_{k,t1})$ des jeweils empfangenen Messdatensatz $M_{t1}$ zu ermitteln. Die Subtraktion der Messwerte erfolgt dabei vorzugsweise derart, dass die Messwerte voneinander abgezogen werden, die von der gleichen Messzelle erzeugt worden sind. Der Differenzwert $d_{1,t1}$ ergibt sich somit beispielsweise durch die Subtraktion des Messwerts $m_{1,t0}$ von dem Messwert $m_{1,t1}$. Entsprechendes gilt in analoger Weise für die anderen Messwerte.

Eine vorteilhafte Ausgestaltung des Systems zeichnet sich dadurch aus, dass die Prädiktionseinheit ausgebildet ist, basierend auf der Formel

$$p_{i,t1} = m_{i,t1} + Q \bullet ((t_1 - t_0) / Tau) \bullet (1 - V) \bullet (m_{i,t1} - m_{i,to})$$

mit i = 1 ... k

für jeden empfangenen Messdatensatz $M_{t1}$ mit den zum Zeitpunkt t1 erfassten Messwerten $(m_{1,t1}, m_{2,t1} .... m_{k,t1})$ einen Prädiktionsdatensatz $P_{t1}$ mit den Prädiktionswerten $(p_{1,t1}, p_{2,t1} .... p_{k,t1})$ unter Berücksichtung des zuvor empfangenen Messdatensatzes $M_{t0}$ mit den zum Zeitpunkt t0 erfassten Messwerten $(m_{1,t0}, m_{2,t0} .... m_{k,t0})$ zu ermitteln, wobei Tau die Zeitkonstante, k die Anzahl der Messwerte des Messdatensatzes, Q ein vorbestimmter Wert, und V ein vorbestimmter Wert zwischen 0,5 und 0,8, insbesondere ein Wert von 0,632, sind. Mit dem Index i kann die jeweilige Messzelle indiziert sein. Die Anzahl der Messzellen entspricht somit der Größe K, die auch gleichzeitig der Anzahl der Messwerte des Messdatensatzes entspricht. Die Messwerte der Messzellen werden mit m bezeichnet. Die zum Zeitpunkt t1 erfassten Messwerte $(m_{1,t1.,}... m_{k,t1})$ bilden somit den jeweils aktuell empfangenen Messdatensatz $M_{t1}$. Der jeweilige Messwert kann dabei einen Aufsetzpunkt zur Bestimmung des Prädiktionswertes für die jeweilige Messzelle bilden. Aus der oben genannten Formel geht als letzter Faktor außerdem die Differenz zwischen dem aktuellen Messwert $m_{i,t1}$ und dem Messwert der gleichen Messzelle vom vorherigen Messwert $m_{1,t0}$ hervor. Der Faktor, der sich aus der Differenz (1-V) ergibt, kann beispielsweise 0,632 bzw. 63,2 % betragen. Dies entspricht dem Wert der Sprungantwort nach einer Zeit, die der einfachen Zeitkonstante entspricht. Die Zeitkonstante wird mit Tau abgekürzt. Da die Zeit zwischen zwei Messpunkten nicht in notwendiger Weise der Zeitkonstante Tau entspricht, findet oben in der Formel außerdem der Faktor $((t_1 - t_0) / Tau)$ Anwendung. Dieser Faktor dient zur Berücksichtigung, welchen Anteil die Zeit zwischen zwei Abtastzeitpunkten im Verhältnis zur Zeitkonstante hat. Schließlich ist in der Formel auch der weitere Faktor Q vorgesehen. Dieser kann dazu verwendet werden, um eine mögliche Vorverstärkung und/oder andere Einflüsse zu beheben, die in dem Detektorarray auf die Messwerte vorgenommen worden sind. Der Wert Q kann somit durch eine konstruktive Ausgestaltung des Detektorarrays bestimmt sein. Der Wert Q kann als ein fester Wert bestimmt sein, wie beispielsweise 1. Grundsätzlich kann Q aber auch ein anderer vorbestimmter Wert sein, insbesondere ein Wert zwischen $10^{-4}$ und $10^6$.

Die zuvor angegebene Formel dient zur Bestimmung der Prädiktionswerte des Prädiktionsdatensatzes. Jeder der Prädiktionswerte des Prädiktionsdatensatzes kann also mittels der zuvor erläuterten Formel ermittelt werden. Die Prädiktionseinheit kann dazu ausgebildet sein, die Formel zu speichern und auszuführen, um den Prädiktionsdatensatz zu ermitteln. Die zuvor genannte Formel ist vorzugsweise eine vereinfachte mathematische Formel zur Bestimmung der Prädiktionswerte, insbesondere dann, wenn die bolometrische Messzelle durch ein Verzögerungsglied erster Ordnung bestimmt ist. Darüber hinaus ist die Formel vereinfacht wiedergegeben. Grundsätzlich kann die Formel jedoch auch genauer wiedergegeben sein. Dies soll im Folgenden erläutert werden.

Eine vorteilhafte Ausgestaltung des Systems zeichnet sich dadurch aus, dass Prädiktionseinheit ausgebildet ist, basierend auf der Formel

$$p_{i,t1} = m_{i,t1} - Q \bullet (m_{i,t1} - m_{i,t0}) / (e^{-t1/Tau} - e^{-t0/Tau}) \bullet e^{-t1/Tau}$$

mit i = 1 ... k

für jeden empfangenen Messdatensatz $M_{t1}$ mit den zum Zeitpunkt t1 erfassten Messwerten ($m_{1,t1}$, $m_{2,t1}$ .... $m_{k,t1}$) einen Prädiktionsdatensatz $P_{t1}$ mit den Prädiktionswerten ($p_{1,t1}$, $p_{2,t1}$ .... $p_{k,t1}$) unter Berücksichtigung des zuvor empfangenen Messdatensatzes $M_{t0}$ mit den zum Zeitpunkt t0 erfassten Messwerten ($m_{1,t0}$, $m_{2,t0}$ .... $m_{k,t0}$) zu ermitteln, wobei Tau die Zeitkonstante, k die Anzahl der Messwerte des Messdatensatzes, und Q ein vorbestimmter Wert sind. Die in der zuvor genannten Formel verwendeten Werte, Parameter und Abkürzungen entsprechen den zuvor erläuterten Werten, Parametern und Abkürzungen. Auf die vorangegangenen Erläuterungen wird deshalb in analoger Weise Bezug genommen. Allerdings werden in der zuletzt genannten Formel mehrere e-Funktionen berücksichtigt, so dass eine genauere Berechnung der Prädiktionswerte und somit eine genauere Bestimmung des Prädiktionsdatensatzes mittels der Prädiktionseinheit möglich ist. Auch die zuletzt genannte Formel kann von der Prädiktionseinheit gespeichert und/oder ausgeführt werden.

Gemäß einem zweiten Aspekt wird die eingangs genannte Aufgabe gelöst durch eine Wärmebildkamera mit den Merkmalen des Anspruchs 7. Vorgesehen ist also eine Wärmebildkamera, die ein Gehäuse, ein Objektiv, eine Signalschnittstelle und ein System aufweist, wobei das System gemäß dem ersten Aspekt und/oder eine der zugehörigen, vorteilhaften Ausgestaltungen ausgebildet ist. Das Objektiv und das bolometrische Detektorarray des Systems sind derart zueinander angeordnet, um Infrarotstrahlung mittels des Objektivs zum Detektorarray zu lenken. Die Signalschnittstelle ist zum Übertragen eines Ausgangssignals ausgebildet, das auf dem Prädiktionssignal basiert. Infrarotstrahlung, die von einem Objekt und/oder der Umgebung mittels des Objektivs zu dem bolometrischen Detektorarray des Systems gelenkt wird, kann dort von den Messzellen des Detektorarrays erfasst werden. Mittels des Systems wird sodann das Prädiktionssignal erzeugt, das die erfasste Infrarotstrahlung zeitnah und quantitativ besonders gut repräsentiert. Für die Wärmebildkamera kann das Ausgangssignal durch das Prädiktionssignal bestimmt sein. Es ist jedoch auch möglich, dass das Ausgangssignal auf dem Prädiktionssignal basiert. So kann das Ausgangssignal durch eine Signalverarbeitung basierend auf dem Prädiktionssignal mittels der Wärmebildkamera erzeugt werden. Das Ausgangssignal wird mittels der Signalschnittstelle zur Verfügung gestellt. Das Ausgangssignal repräsentiert vorzugsweise Wärmebilder, die zu der erfassten Infrarotstrahlung korrespondieren. Das Ausgangssignal kann mittels der Signalschnittstelle an eine Empfangseinheit und/oder einer anderen Vorrichtung übertragen werden, die zum Empfang des Ausgangssignals ausgebildet ist. Die Signalschnittstelle kann eine kabelgebundene Signalschnittstelle und/oder eine Funksignalschnittstelle sein. Somit kann die Signalschnittstelle zum Senden des Ausgangssignals ausgebildet sein, um die Übertragung des Ausgangssignals zu gewährleisten.

Für die Wärmebildkamera und/oder das zugehörige System wird auf die vorangegangenen Erläuterungen, bevorzugten Merkmale, Effekte und/oder Vorteile in analoger Weise Bezug genommen, wie sie im Zusammenhang mit dem System gemäß dem ersten Aspekt der Erfindung und/oder eine der zugehörigen, vorteilhaften Ausgestaltungen erläutert worden sind. Auf eine Wiederholung wird deshalb verzichtet.

Eine vorteilhafte Ausgestaltung der Wärmebildkamera zeichnet sich durch eine Prozessoreinheit aus, die basierend auf den von dem Prädiktionssignal repräsentierten Prädiktionsdatensätzen zur Erzeugung von zeitlich aufeinander folgenden Wärmebildern ausgebildet ist. Die Prozessoreinheit ist außerdem zur Erzeugung des Ausgangssignals ausgebildet, so dass das Ausgangssignal eine sequentielle Folge der zeitlich aufeinander folgenden Wärmebilder als Wärmebildvideosignal repräsentiert. Mittels der Signalschnittstelle der Wärmebildkamera kann somit ein Wärmebildvideosignal zur Verfügung gestellt werden, das Wärmebilder umfasst, die jeweils die Wärmeverteilung von einem Objekt und/oder einer Umgebung zeigen, von dem bzw. der die Infrarotstrahlung ausgeht.

Gemäß einem dritten Aspekt der Erfindung wird die eingangs genannte Aufgabe gelöst durch ein Verfahren mit den Merkmalen des Anspruchs 9. Vorgesehen ist also ein Verfahren zum Erzeugen eines Prädiktionssignals mit einem System, das eine Prädiktionseinheit und ein bolometrisches Detektorarray mit einer Vielzahl von bolometrischen Messzellen aufweist. Das Verfahren weist zumindest die Schritte a) bis g) auf, die im Folgenden wiedergegeben sind:

a) Erfassen von Infrarotstrahlung mittels jeder bolometrischen Messzelle,
b) Erzeugen eines Messsignals mittels jeder bolometrischen Messzelle basierend auf der von der jeweiligen bolometrischen Messzelle erfassten Infrarotstrahlung, wobei jede bolometrische Messzelle als ein Verzögerungsglied mit einer Zeitkonstante ausgebildet ist, die durch einen thermischen Widerstand der jeweiligen Messzelle und eine thermische Kapazität der jeweiligen Messzelle bestimmt ist,

c) Erzeugen jeweils eines Messdatensatzes an zeitlich aufeinander folgenden Messzeitpunkten mittels des Detektorarrays,

d) Übertragen der Datensätze zeitlich aufeinander folgend an die Prädiktionseinheit mittels des Systems,

e) Ermitteln eines Differenzdatensatzes für jeden von der Prädiktionseinheit empfangenen Messdatensatz mittels der Prädiktionseinheit, wobei der jeweilige Differenzdatensatz die Messwertdifferenz der Messwerte zwischen dem jeweiligen empfangenen Messdatensatz und dem zeitlich zuvor empfangenen Messdatensatz repräsentiert,

f) Ermitteln eines Prädiktionsdatensatzes basierend auf dem ermittelten Differenzdatensatz, der durch den jeweils empfangenen Messdatensatz ermittelt wurde, und einer Kenngröße mittels der Prädiktionseinheit derart, dass der jeweilige Prädiktionsdatensatz für jeden Messwert des jeweiligen empfangenen Messdatensatzes einen die Zeitverzögerung kompensierten Vorhersagewert repräsentiert, und

g) Erzeugen eines Prädiktionssignals mittels der Prädiktionseinheit, das die zeitlich nacheinander ermittelten Prädiktionsdatensätze repräsentiert.

Gemäß Schritt a) wird von jeder Messzelle Infrarotstrahlung erfasst. Die auf die jeweilige Messzelle eintreffende Infrarotstrahlung kann von Messzelle zu Messzelle unterschiedlich sein. Somit kann jede Messzelle eine unterschiedliche Intensität von Infrarotstrahlung erfassen. Die Erfassung der Infrarotstrahlung mittels der Messzellen kann kontinuierlich erfolgen.

Gemäß Schritt b) wird von jeder Messzelle ein zugehöriges Messsignal erzeugt, dass die von der jeweiligen Messzelle erfasste Infrarotstrahlung repräsentiert. Da jede Messzelle als ein Verzögerungsglied mit einer Zeitkonstante ausgebildet ist, ist das Messsignal jedoch zeitverzögert in Bezug auf die von der jeweiligen Messzelle erfasste Infrarotstrahlung. Die Verzögerung wird durch die Zeitkonstante charakterisiert, die wiederum durch den thermischen Widerstand der jeweiligen Messzelle und die thermische Kapazität der jeweiligen Messzelle bestimmt ist.

Das Detektorarray des Systems umfasst eine Vielzahl von Messzellen. Für jede der Messzellen werden die Schritte a) und b) parallel ausgeführt.

Gemäß Schritt c) wird mittels des Detektorarrays jeweils ein Messdatensatz an zeitlich aufeinander folgenden Messzeitpunkten erzeugt. Jeder Messdatensatz repräsentiert die Messwerte der Messzellen zum jeweiligen Messzeitpunkt. Ein Messwert einer Messzelle entspricht dem aktuellen Wert des Messsignals zum jeweiligen Messzeitpunkt. Jeder Messdatensatz ist also durch Daten bestimmt, die mittels der Prädiktionseinheit des Systems verarbeitet werden können.

Gemäß Schritt d) werden die Messdatensätze von dem Detektorarray zeitlich aufeinander folgend an die Prädiktionseinheit übertragen. Zwischen dem Detektorarray und der Prädiktionseinheit kann eine Signalverbindung bestehen, die zur Übertragung von Messdatensätzen ausgebildet ist. Diese kann zur Übertragung der Messdatensätze verwendet werden.

Gemäß Schritt e) wird für jeden von der Prädiktionseinheit empfangenen Messdatensatz ein (neuer) Differenzdatensatz mittels der Prädiktionseinheit ermittelt. Der jeweilige Differenzdatensatz repräsentiert die Messwertdifferenz der Messwerte zwischen den jeweiligen (zuletzt) empfangenen Messdatensatz und dem zeitlich zuvor empfangenen Messdatensatz. Der zeitlich zuvor empfangene Messdatensatz kann von der Prädiktionseinheit gespeichert sein. Dieser kann dann schrittweise bei der Berechnung des jeweils (neuen) Differenzdatensatzes ersetzt werden. Bezüglich der Ermittlung des Differenzdatensatzes wird auf die Erläuterungen Bezug genommen, wie sie im Zusammenhang mit dem System gemäß dem ersten Aspekt der Erfindung erläutert worden sind.

Gemäß Schritt f) wird mittels der Prädiktionseinheit ein Prädiktionsdatensatz für jeden und basierend auf den (zuletzt) ermittelten Differenzdatensatz und der Kenngröße ermittelt. Hierzu ist die Prädiktionseinheit bevorzug ausgebildet. Der zuletzt ermittelte Differenzdatensatz wurde mittels des zuletzt empfangenen Messdatensatzes ermittelt. Der Prädiktionsdatensatz weist für jeden Messwert bzw. für jede Messzelle einen Prädiktionswert auf. Die Prädiktionswerte des Prädiktionsdatensatzes repräsentieren somit Messwerte für die Messzelle, die in einem statischen Zustand der Messzellen bei gleichbleibender Infrarotstrahlung gemessen werden könnten. Praktisch ist dies jedoch nicht der Fall, denn die Infrarotstrahlung ändert sich für gewöhnlich mit der Zeit. Darüber hinaus ist der Prädiktionsdatensatz deutlich schneller ermittelbar als die Messung eines statischen Wertes.

Gemäß Schritt g) wird ein Prädiktionssignal mittels der Prädiktionseinheit erzeugt, wobei das Prädiktionssignal die zeitlich aufeinander ermittelten Prädiktionsdatensätze repräsentiert.

Für das Verfahren wird auf die vorteilhaften Erläuterungen, bevorzugten Merkmale, Effekte und/oder Vorteile, wie sie im Zusammenhang mit dem System gemäß dem ersten Aspekt der Erfindung und/oder eine der zugehörigen, vorteilhaften Ausgestaltungen erläutert worden sind, zumindest in analoger Weise Bezug genommen. Das Verfahren bietet somit den Vorteil, dass das Prädiktionssignal mittels des Verfahrens erzeugbar ist, um zeitlich besonders schnell und quantitativ besonders korrekte Dateninformationen zu erhalten, die die von den Messzellen erfasste Infrarotstrahlung repräsentiert. Mittels des Prädiktionssignals kann somit zumindest ein Wärmebild oder eine Folge von Wärmebildern repräsentiert und/oder übertragen werden, die auf eine Wärmeverteilung eines Objekts und/oder einer Umgebung schließen lassen, von dem bzw. der Infrarotstrahlung ausgeht.

Zu den im Folgenden wiedergegebenen, vorteilhaften Ausgestaltungen des Verfahrens wird auf die Erläuterungen, bevorzugten Merkmale, Effekte und Vorteile in analoger Weise Bezug genommen, wie sie für das System gemäß dem ersten Aspekt der Erfindung und/oder einer der zugehörigen, vorteilhaften Ausgestaltungen des Systems erläutert worden sind.

Eine vorteilhafte Ausgestaltung des Verfahrens zeichnet sich dadurch aus, dass die Zeitkonstante die Kenngröße ist oder dass die Kenngröße ein vorbestimmter und/oder auf der Zeitkonstante basierender Wert ist.

Erfindungsgemäß zeichnet sich das Verfahren dadurch aus, dass der Prädiktionsdatensatz in Schritt f) basierend auf dem jeweils empfangenen Messdatensatz, dem Differenzdatensatz, der durch jeweils empfangenen Messdatensatz ermittelt wurde, und der Kenngröße mittels der Prädiktionseinheit ermittelt wird.

Erfindungsgemäß zeichnet sich das Verfahren dadurch aus, dass der Prädiktionsdatensatz in Schritt f) derart ermittelt wird, dass der jeweilige Prädiktionsdatensatz für jeden Messwert des jeweiligen empfangenen Messdatensatzes einen die Zeitverzögerung kompensierten Vorhersagewert repräsentiert.

Eine vorteilhafte Ausgestaltung des Verfahrens zeichnet sich dadurch aus, dass in Schritt c) die Erzeugung jeweils eines Messdatensatzes an zeitlich aufeinander folgenden Messzeitpunkten mit einer Abtastfrequenz von mindestens 20 Hz mittels des Detektorarrays.

Eine vorteilhafte Ausgestaltung des Verfahrens zeichnet sich dadurch aus, dass in Schritt e) für jeden empfangenen Messdatensatz $M_{t1}$ mit den Messwerten ($m_{1,t1}$, $m_{2,t1}$ .... $m_{k,t1}$) ein Differenzdatensatz $D_{t1}$ mit den Messwertdifferenzen ($d_{1,t1}$, $d_{2,t1}$ .... $d_{k,t1}$) durch Subtraktion der Messwerte ($m_{1,t0}$, $m_{2,t0}$ .... $m_{k,t0}$) eines zuvor empfangenen Messdatensatzes $M_{t0}$ von den Messwerten ($m_{1,t1}$, $m_{2,t1}$ .... $m_{k,t1}$) des jeweils empfangenen Messdatensatz $M_{t1}$ ermittelt wird.

Eine vorteilhafte Ausgestaltung des Verfahrens zeichnet sich dadurch aus, dass in Schritt f) basierend auf der Formel

$$p_{i,t1} = m_{i,t1} + Q \bullet ((t1 - t0) / \text{Tau}) \bullet (1 - V) \bullet (m_{i,t1} - m_{i,t0})$$

mit i = 1 ... k

für jeden empfangenen Messdatensatz $M_{t1}$ mit den zum Zeitpunkt t1 erfassten Messwerten ($m_{1,t1}$, $m_{2,t1}$ .... $m_{k,t1}$) ein Prädiktionsdatensatz $P_{t1}$ mit den Prädiktionswerten ($p_{1,t1}$, $p_{2,t1}$ .... $p_{k,t1}$) unter Berücksichtigung des zuvor empfangenen Messdatensatzes $M_{t0}$ mit den zum Zeitpunkt t0 erfassten Messwerten ($m_{1,t0}$, $m_{2,t0}$ .... $m_{k,t0}$) ermittelt wird, wobei Tau die Zeitkonstante, k die Anzahl der Messwerte des Messdatensatzes, Q ein vorbestimmter Wert, und V ein vorbestimmter Wert zwischen 0,5 und 0,8, insbesondere ein Wert von 0,632, sind.

Eine vorteilhafte Ausgestaltung des Verfahrens zeichnet sich dadurch aus, dass in Schritt f) basierend auf der Formel

$$p_{i,t1} = m_{i,t1} - Q \bullet (m_{i,t1} - m_{i,t0}) / (e^{-t1/\text{Tau}} - e^{-t0/\text{Tau}}) \bullet e^{-t1/\text{Tau}}$$

mit i = 1 ... k

für jeden empfangenen Messdatensatz $M_{t1}$ mit den zum Zeitpunkt t1 erfassten Messwerten ($m_{1,t1}$, $m_{2,t1}$ .... $m_{k,t1}$) ein Prädiktionsdatensatz $P_{t1}$ mit den Prädiktionswerten ($p_{1,t1}$, $p_{2,t1}$ .... $p_{k,t1}$) unter Berücksichtigung des zuvor empfangenen Messdatensatzes $M_{t0}$ mit den zum Zeitpunkt t0 erfassten Messwerten ($m_{1,t0}$, $m_{2,t0}$ .... $m_{k,t0}$) ermittelt wird, wobei Tau die Zeitkonstante, k die Anzahl der Messwerte des Messdatensatzes, und Q ein vorbestimmter Wert sind.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.

Figur 1    zeigt eine vorteilhafte Ausgestaltung des Systems in einer schematischen Darstellung.

Figur 2    zeigt eine beispielhafte Verteilung der Messzellen des Detektorarrays in einer schematischen Darstellung.

Figur 3    zeigt den Verlauf eines Messsignals einer Messzelle in Reaktion auf einen sprunghaften Anstieg der erfassten Infrarotstrahlung in einer schematischen Darstellung.

Figur 4    zeigt einen matrixförmigen Messdatensatz der zum Zeitpunkt t0 erfassten Messwerte umfasst.

Figur 5    zeigt einen matrixförmigen Messdatensatz der zum Zeitpunkt t1 erfassten Messwerte umfasst.

Figur 6    zeigt einen matrixförmigen Differenzdatensatz.

Figur 7    zeigt einen matrixförmigen Prädiktionsdatensatz.

Figur 8     zeigt einen beispielhaften und schematischen Verlauf der Messwerte und Prädiktionswerte einer Messzelle bei einer sprunghaften Änderung der von der Messzelle erfassten Infrarotstrahlung.

Figur 9     zeigt eine vorteilhafte Ausgestaltung der Wärmebildkamera in einer schematischen Darstellung.

Figur 10    zeigt eine vorteilhafte Ausgestaltung des Verfahrens in einem schematischen Ablaufplan.

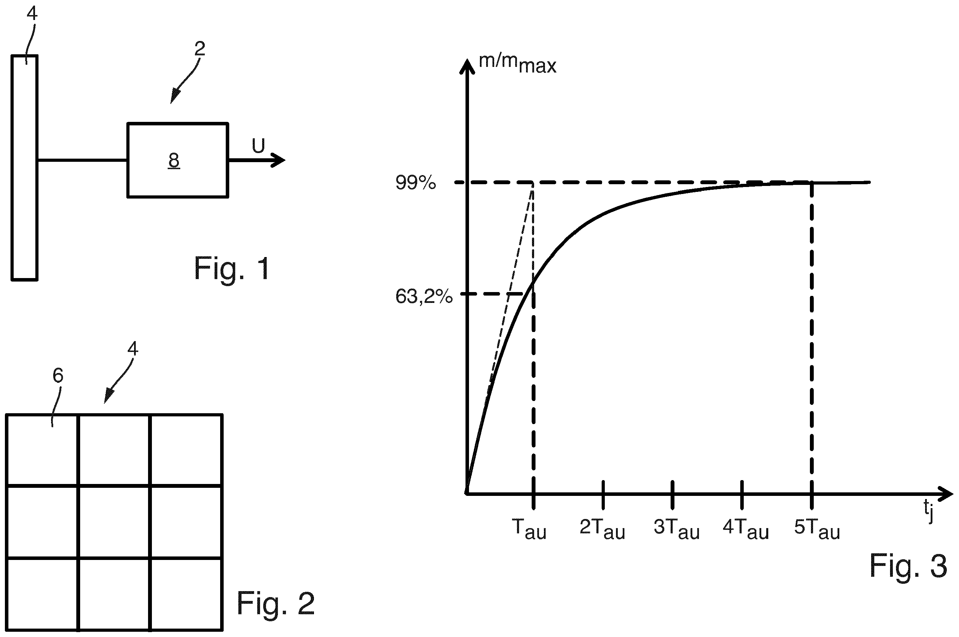

In der Figur 1 ist eine vorteilhafte Ausgestaltung des Systems 2 schematisch dargestellt. Das System 2 weist einen Detektorarray 4 und eine Prädiktionseinheit 8 auf. Das Detektorarray 4 weist eine Vielzahl von bolometrischen Messzellen 6 auf. In der Figur 2 ist eine schematische Schnittdarstellung des Detektorarrays 4 dargestellt, aus der eine beispielhafte Aufteilung und Anordnung der Messzellen 6 zu entnehmen ist. Rein beispielhaft weist das in Figur 2 dargestellte Detektorarray 4 neun Messzellen 6 auf. Diese Messzellen 6 können im Weiteren durch die Indizes 1 bis 9 gekennzeichnet sein. In der Praxis wird ein Detektorarray 4 oftmals eine deutlich größere Anzahl an Messzellen 6 aufweisen. So ist es beispielsweise vorgesehen, dass das Detektorarray 4 mehr als 50000 Messzellen 6 oder mehr als 500000 Messzellen 6 aufweist.

Jede Messzelle 6 ist als eine bolometrische Messzelle 6 ausgebildet. Jede Messzelle 6 kann als ein Bolometer oder nach Art eines Bolometers ausgebildet sein. Jede Messzelle 6 ist zur Erfassung von Infrarotstrahlung ausgebildet. Jede Messzelle 6 weist einen thermischen Widerstand und eine thermische Kapazität auf. Sofern Infrarotstrahlung auf eine Messzelle 6 einwirkt, wird Wärme aufgrund der thermischen Kapazität der Messzelle 6 gespeichert. Wie schnell die Wärme von der Messzelle 6 gespeichert wird, hängt auch von dem thermischen Widerstand ab. Die bolometrische Messzelle 6 ist deshalb als ein Verzögerungsglied mit einer Zeitkonstante ausgebildet. Vorzugsweise ist jede bolometrische Messzelle 6 als ein Verzögerungsglied erster Ordnung mit einer Zeitkonstante Tau ausgebildet. Die Zeitkonstante kann sich durch das Produkt aus dem thermischen Widerstand der jeweiligen Messzelle 6 und der thermischen Kapazität der jeweiligen Messzelle 6 bestimmen. Die Zeitkonstante Tau kann auch als ein Maß für die Trägheit der jeweiligen Messzelle 6 interpretiert werden. Denn desto größer die Zeitkonstante Tau ist, desto träger reagiert die Messzelle 6 auf eine sprunghafte Veränderung der auf die Messzelle 6 einwirkenden Infrarotstrahlung. Im Weiteren wird rein beispielhaft und vereinfacht betrachtet von einer Messzelle 6 ausgegangen, die als ein Verzögerungsglied erster Ordnung mit der Zeitkonstante Tau, ausgebildet ist. Steigt die auf die Messzelle einwirkende Infrarotstrahlung sprunghaft, insbesondere nach Art eines Einheitssprungs, an, so wird der von der Messzelle 6 erzeugte Messwert m zeitverzögert und nach Art einer e-Funktion ansteigen. Dieses Verhalten ist für Verzögerungsglieder erster Ordnung bekannt. Die von der Messzelle 6 erzeugten Messwerte m werden für gewöhnlich zu vorbestimmten, diskreten Messzeitpunkten $t_j$, die äquidistant voneinander entfernt sind, erzeugt.

Das Detektorarray 4 ist deshalb dazu ausgebildet, an zeitlich aufeinander folgenden Messzeitpunkten $t_j$ einen Messdatensatz M zu erzeugen, der die Messwerte ($m_{1,\,t_j}$ ... $m_{9,\,t_j}$) der Messzellen 6 zum jeweiligen Messzeitpunkt $t_j$ repräsentiert.

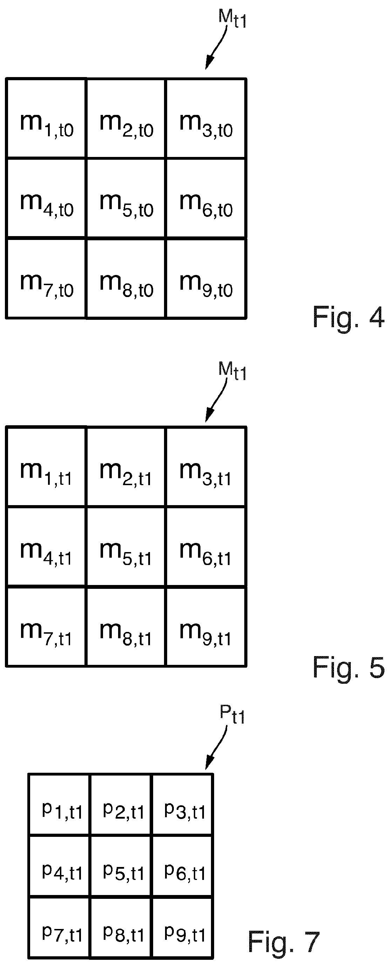

In der Figur 4 ist der Messdatensatz $M_{t0}$ matrixförmig und schematisch dargestellt. Der Messdatensatz $M_{t0}$ wurde zum Zeitpunkt t0 erzeugt und umfasst die Messwerte ($m_{1,t0}$, $m_{2,t0}$ .... $m_{9,t0}$). Entsprechend der Anzahl der Messzellen 6 des Detektorarrays 4 ist für den Messdatensatz $M_{t0}$ eine gleiche Anzahl von Messwerten m vorgesehen. Durch die matrixförmige Darstellung des Messdatensatzes $M_{t0}$ kann auch eine Zuordnung der Messwerte $M_{i,t0}$ zu den Messzellen 6 erfolgen. Denn diese sind ebenfalls matrixförmig angeordnet.

In der Figur 5 ist ein weiterer Messdatensatz $M_{t1}$ dargestellt. Der Messdatensatz $M_{t1}$ umfasst die Messwerte ($m_{1,t1}$, $m_{2,t1}$ .... $m_{9,t1}$), die zum Zeitpunkt t1 mittels des Detektorarrays 4 erfasst und erzeugt worden sind. Die Zeitpunkte t0 und t1 sind aufeinander folgende Zeitpunkte. Der Zeitpunkt t1 wird als der aktuelle Zeitpunkt verstanden, sodass der Zeitpunkt t0 als der zeitlich vorangegangene Zeitpunkt verstanden werden soll.

In der Figur 3 ist die Sprungantwort eines Verzögerungsglieds erster Ordnung schematisch dargestellt. Daraus ist zu erkennen, dass der maximale Messwert $m_{max}$ nach ca. 5 Tau erreicht ist. Nach einer Zeit von etwa 1 Tau erreicht der Messwert m bereits 63,2 % des Maximalwerts $m_{max}$. Aufgrund dieser bekannten Zusammenhänge ist es möglich, aus der Differenz zwischen zwei aufeinander folgenden Messwerten der Messzelle 6 eine Abschätzung darüber zu treffen, welcher Messwert sich bei einer Zeit von 5 Tau einstellen wird. Die Größe Tau bezeichnet hierbei die Zeitkonstante des Verzögerungsglieds. Aus der Differenz zwischen zwei aufeinander folgenden Messwerten und der Zeitkonstante kann somit rechnerisch auf den maximalen Messwert $m_{max}$ geschlossen werden, die nach einer Zeit von 5 Tau gemessen werden, würde.

Für das System 2 ist es deshalb vorgesehen, dass die Messdatensätze M von dem Detektorarray 4 zeitlich aufeinander folgend an die Prädiktionseinheit 8 übertragen werden. Das Detektorarray 4 und die Prädiktionseinheit 8 können dazu mit einer Signalverbindung, insbesondere ausgestaltet als eine Signalleitungsverbindung, verbunden sein. Die Signalverbindung kann zum Übertragen eines Signals von dem Detektorarray 4 an die Prädiktionseinheit 8 ausgebildet sein, wobei das Signal die zeitlich aufeinander folgenden Messdatensätze M repräsentiert.

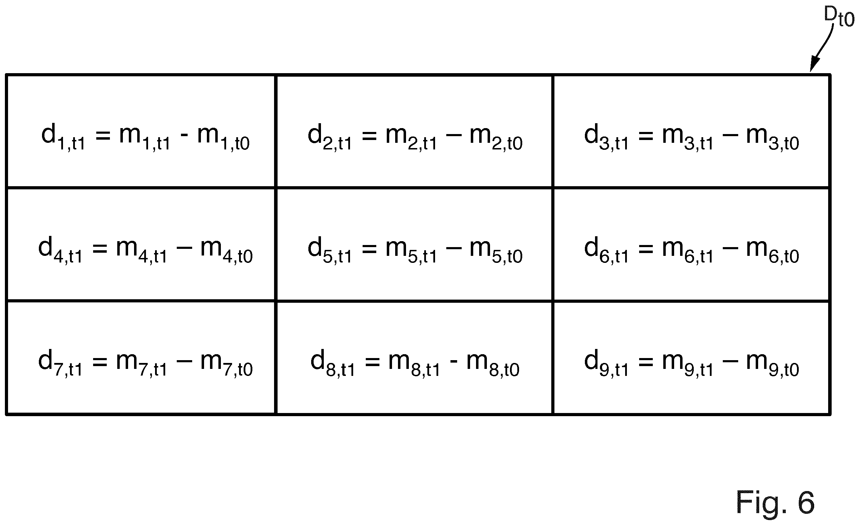

Um die Voraussage über den zu erwartenden, maximalen Messwert $m_{max}$ zu ermöglichen, sind die Differenzwerte d zwischen zwei aufeinander folgenden Messwerten m der gleichen Messzelle 6 zu bestimmen. Dies ist sodann für alle Messzellen 6 erfolgen. Die Prädiktionseinheit 8 ist deshalb dazu ausgebildet, für jeden Messdatensatz M einen Differenzdatensatz D zu ermitteln. Beispielhaft soll dies anhand des Messdatensatzes $M_{t1}$ erläutert werden. In diesem Fall repräsentiert der Differenzdatensatz $D_{t1}$ die Messwertdifferenzen ($d_{1,t1}$, $d_{2,t1}$ ... $d_{9,t1}$) der Messwerte des Messdatensatzes $M_{t1}$ und dem zuvor empfangenen Messdatensatz $M_{t0}$. Der Differenzdatensatz $D_{t1}$ ist für dieses Beispiel exemplarisch in Figur 6 schematisch dargestellt. Für jede der Messzellen 6 umfasst der Differenzdatensatz $D_{t1}$ also eine Messwertdifferenz zwischen dem aktuellen Messwert $m_{i,t1}$ und dem zeitlich zuvor empfangenen Messwert $m_{i,t0}$. Die Messwertdifferenz $d_{i,t1}$ kann deshalb unter Berücksichtigung einer die Messzelle 6 repräsentierenden Kenngröße Tau dazu verwendet werden, um einen Prädiktionswert $p_{i,t1}$ für die jeweilige Messzelle 6 zu ermitteln, sodass der Prädiktionswert $P_{i,t1}$ eine Voraussage für den maximalen Messwert $m_{max}$ der jeweiligen Messzelle 6 angibt, der sich einstellen würde, wenn die Infrarotstrahlung bei gleichbleibender Intensität über einen Zeitraum von 5 Tau gemessen werden würde. Mit anderen Worten kann der Prädiktionswert $p_{i,t1}$ einen Wert angeben, der die tatsächlich erfasste Infrarotstrahlung repräsentiert, obwohl die Messzelle 6 aufgrund der Zeitverzögerung entsprechend der Zeitkonstante den entsprechenden Messwert $m_{max}$ erst verspätet erzeugen würde. Die Kenngröße wird vorzugsweise durch die Zeitkonstante Tau bestimmt. Mit anderen Worten kann die Zeitkonstante Tau die Kenngröße bilden. Die Kenngröße kann für jede der Messzellen 6 individuell durch die zugehörige Zeitkonstante Tau bestimmt sein. Bevorzugt sind die Messzellen 6 des Detektorarrays 4 gleich ausgebildet. Somit können die Messzellen 6 jeweils die gleiche Zeitkonstante Tau aufweisen. Die Kenngröße kann also für alle Messzellen 6 die gleiche Zeitkonstante Tau sein.

Wird mittels der Prädiktionseinheit 8 der Prädiktionsdatensatz $P_{t1}$ basierend auf dem Differenzdatensatz $D_{t1}$ und der Kenngröße bzw. der Zeitkonstante Tau ermittelt, so kann daraus beispielsweise der in Figur 7 schematisch und beispielhaft dargestellte Prädiktionsdatensatz $P_{t1}$ erzeugt werden. Dieser ist vorzugsweise ebenfalls matrixförmig, sodass der Prädiktionsdatensatz $P_{t1}$ Prädiktionswerte ($p_{1,t1}$, $p_{2,t1}$ ... $p_{9,t1}$) aufweist. Somit kann für jede der Messzellen 6 ein zugehöriger Prädiktionswert von dem Prädiktionsdatensatz $P_{t1}$ umfasst sein. Jeder der Prädiktionswerte $p_{i,t1}$ repräsentiert einen Vorhersagewert für die tatsächlich von der jeweiligen Messzelle 6 erfasste Infrarotstrahlung. Der Prädiktionsdatensatz $P_{t1}$ bietet deshalb den Vorteil, dass die tatsächlich von dem Detektorarray 4 erfasste Infrarotstrahlung repräsentiert sein kann. Die Ermittlung des Prädiktionsdatensatzes $P_{t1}$ wird mittels der Prädiktionseinheit 8 vorzugsweise in der gleichen Frequenz erzeugt, wie die Messdatensätze M mittels des Detektorarrays 4 erzeugt werden. Der Prädiktionsdatensatz P kann somit besonders schnell erzeugt werden, und zwar deutlich vor dem Zeitpunkt, der sonst abgewartet werden müsste, um den zeitverzögerten Anstieg der Messwerte aufgrund des Zeitverzögerungsverhaltens der Messzellen 6 abzuwarten. Mittels des Systems 2 lässt sich deshalb eine besonders schnelle und quantitativ abgeschätzte Voraussage über die tatsächliche von den Messzellen 6 erfasste Infrarotstrahlung ermitteln.

Darüber hinaus ist die Prädiktionseinheit 8 ausgebildet, ein Prädiktionssignal u zu erzeugen, das die zeitlich nacheinander ermittelten Prädiktionsdatensätze P repräsentiert. Das Prädiktionssignal u kann an eine weitere Einheit übertragen werden, um beispielsweise basierend auf dem Prädiktionssignal u ein Videosignal zu erzeugen, das Wärmebilder repräsentiert. Das Videosignal kann an eine Anzeigeeinheit übertragen werden, die die Bilder des Videosignals optisch ausgibt.

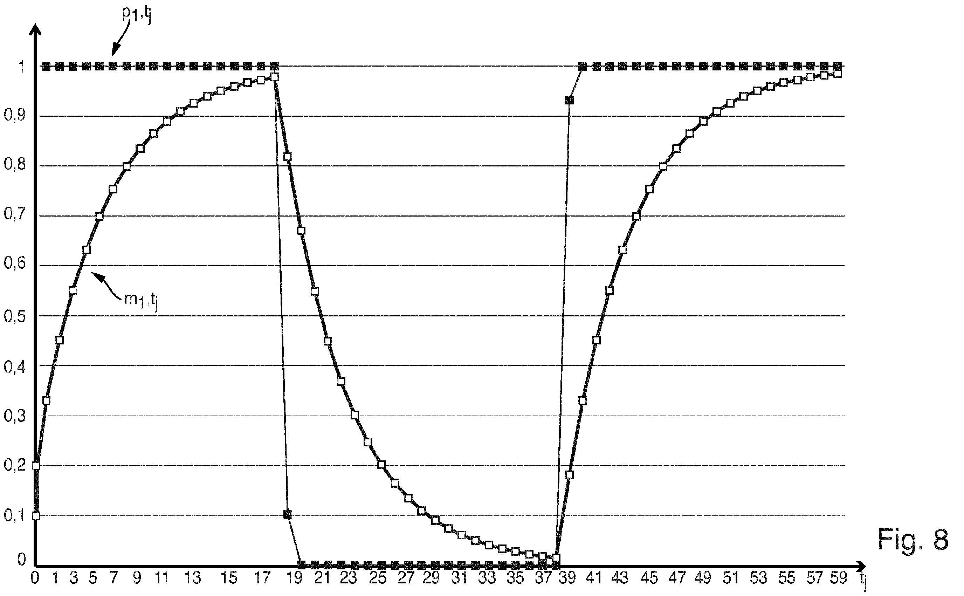

In der Figur 8 sind die Messwerte $m_{1,tj}$ einer Messzelle 6 des Detektorarrays 4 für eine Vielzahl von Messzeitpunkten $t_j$ dargestellt. Der Verlauf der Messwerte $m_{1,tj}$ resultiert aufgrund eines rechteckförmigen Verlaufs der Infrarotstrahlung, die von der Messzelle 6 erfasst wird. Beim Zeitpunkt $t_0$ steigt die auf die Messzelle wirkende Infrarotstrahlung sprunghaft an. Aufgrund des Zeitverzögerungsverhaltens der Messzelle 6 steigt der durch die Messwerte $m_{1,tj}$ approximierte Verlauf zunächst exponentiell an. Wie zuvor erläutert, kann die Messwertdifferenz beispielsweise zwischen dem Messwert $m_{1,t1}$ und $m_{1,t0}$ unter zusätzlicher Berücksichtigung der Zeitkonstante Tau der Messzelle verwendet werden, um einen Messwert zu approximieren, der die tatsächlich auf die Messzelle wirkende Infrarotstrahlung repräsentiert. In der Figur 8 sind deshalb die entsprechenden, mittels der Prädiktionseinheit 8 ermittelten Prädiktionswerte $p_{1,tj}$ für die Vielzahl der Messzeitpunkte tj dargestellt. Aus dem approximierten Verlauf, der sich anhand der Prädiktionswerte $p_{1,tj}$ ergibt, ist zu erkennen, dass die Prädiktionswerte $p_{1,tj}$ einen rechteckförmigen Verlauf zumindest im Wesentlichen abbilden. Dieser Verlauf entspricht zumindest im Wesentlichen dem Signalverlauf der Infrarotstrahlung, die tatsächlich auf die Messzelle 4 wirkt. Aus der Figur 8 lässt sich deshalb entnehmen, dass mittels der Prädiktionseinheit 8 ein Prädiktionssignal u erzeugbar ist, das die tatsächlich auf die Messzellen einwirkende Infrarotstrahlung zeitnah und quantitativ annähernd korrekt wiedergibt.

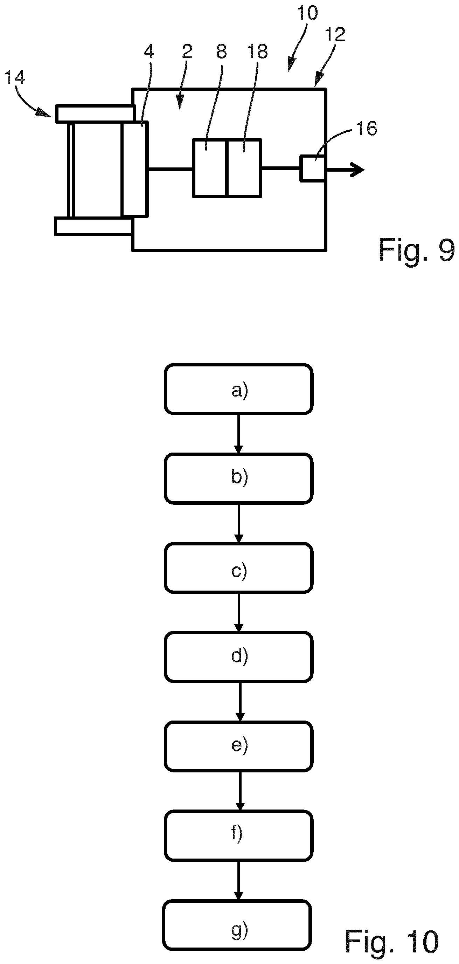

In der Figur 9 ist eine vorteilhafte Ausgestaltung einer Wärmebildkamera 10 schematisch dargestellt. Die Wärmebildkamera 10 weist ein Gehäuse 12, ein Objektiv 14, eine Signalschnittstelle 16 sowie ein System 2 auf. Bei dem System 2 handelt es sich vorzugsweise um das System 2, wie es zuvor erläutert wurde. Das System 2 ist innerhalb des Gehäuses 12 angeordnet. Vorzugsweise ist das bolometrische Detektorarrays 4 des Systems 2 derart an einer Öffnung des Gehäuses 12 angeordnet, so dass mittels des Objektivs 14 Infrarotstrahlung zum Detektorarray 4 gelenkt wird. Mit anderen Worten ist es bevorzugt vorgesehen, dass das Objektiv 14 und das bolometrische Detektorarray 4 des Systems 2 derart zueinander angeordnet sind, um Infrarotstrahlung mittels des Objektivs 14 zum Detektorarray 4 zu lenken. Die Signalschnittstelle 16 ist zum Übertragen eines Ausgangssignals ausgebildet, das auf dem Prädiktionssignal u basiert. Wird nun beispielsweise Infrarotstrahlung von einem zu erfassenden Objekt mittels des Objektivs 14 zu dem Detektorarray 4 gelenkt, so wird diese Infrarotstrahlung mittels der Sensorzellen 6 des Detektorarrays 4 erfasst, was wiederum zu der Erzeugung von Messdatensätzen $M_{tj}$ führt, die an die Prädiktionseinheit 8 des Systems 2 übertragen werden. Die Prädiktionseinheit 8 ermittelt sodann in zeitlich aufeinanderfolgenden Abständen jeweils ein Prädiktionsdatensatz $P_{tj}$, und ermittelt ein Prädiktionssignal u, das diese Prädiktionsdatensätze $P_{tj}$ repräsentiert. Das Prädiktionssignal u kann direkt an die Prozessoreinheit 18 weitergeleitet werden. Die Prädiktionseinheit 8 und die Prozessoreinheit 18 können durch eine gemeinsame Datenverarbeitungseinheit ausgebildet sein. In diesem Fall kann auch eine interne Weiterleitung der Prädiktionsdatensätze als eine Signalübertragung verstanden werden. Die Prozessoreinheit 18 ist dazu ausgebildet, die basierend auf den von dem Prädiktionssignal repräsentierten Prädiktionsdatensätzen $P_{tj}$ zur Erzeugung von zeitlich aufeinanderfolgenden Wärmebildern zu verwenden. Außerdem ist die Prozessoreinheit 18 zur Erzeugung des Ausgangssignals ausgebildet. Das Ausgangssignal kann dabei eine sequentielle Folge der zeitlich aufeinanderfolgenden Wärmebilder als Wärmebildvideosignal repräsentieren. Die Signalschnittstelle 16 kann zum Übertragen, insbesondere Senden, des Ausgangssignals ausgebildet sein. Die Wärmebilder des Wärmebildvideosignals können dabei die Wärmeverteilung des Objekts wiedergeben, von dem die Infrarotstrahlung ausgeht und mittels des Detektorarrays 4 erfasst wird.

In der Figur 10 ist eine vorteilhafte Ausgestaltung des Verfahrens zum Erzeugen eines Prädiktionssignals u mittels des Systems 2, das die Prädiktionseinheit 8 und das bolometrische Detektorarray 4 aufweist, in einem schematischen Ablaufplan dargestellt. In dieser Ausgestaltung umfasst das Verfahren die Schritte a) bis g). Im Folgenden werden diese Verfahrensschritte wiedergegeben:

> a) Erfassen von Infrarotstrahlung mittels jeder bolometrischen Messzelle 6;
> b) Erzeugen eines Messsignals mittels jeder bolometrischen Messzelle 6 basierend auf der von der jeweiligen bolometrischen Messzelle 6 erfassten Infrarotstrahlung, wobei jede bolometrische Messzelle 6 als ein Verzögerungsglied mit einer Zeitkonstante Tau ausgebildet ist, die durch einen thermischen Widerstand der jeweiligen Messzelle 6 und eine thermische Kapazität der jeweiligen Messzelle bestimmt ist;
> c) Erzeugen jeweils eines Messdatensatzes $M_{tj}$ an zeitlich aufeinanderfolgenden Messzeitpunkten $t_j$ mittels des Detektorarrays 4;
> d) Übertragen der Messdatensätze $M_{tj}$ zeitlich nacheinander folgend an die Prädiktionseinheit 8 mittels des Systems 2;
> e) Ermitteln eines Differenzdatensatzes $D_{tj}$ für jeden von der Prädiktionseinheit 8 empfangenen Messdatensatz $M_{tj}$ mittels der Prädiktionseinheit 8, wobei der jeweilige Differenzdatensatz $D_{tj}$ die Messwertdifferenz der Messwerte zwischen dem jeweiligen empfangenen Messdatensatz $M_{tj}$ bzw. $M_{t1}$ und dem zeitlich zuvor empfangenen Messdatensatz $M_{tj-1}$ bzw. $M_{t0}$ repräsentiert;
> f) Ermitteln eines Prädiktionsdatensatzes $P_{tj}$ basierend auf dem ermittelten Differenzdatensatz $D_{tj}$, der durch den jeweils empfangenen Messdatensatz $M_{tj}$ ermittelt wurde, und einer Kenngröße Tau mittels der Prädiktionseinheit 8; und
> g) Erzeugen eines Prädiktionssignals u mittels der Prädiktionseinheit 8, das die zeitlich nacheinander ermittelten Prädiktionsdatensätze $P_{tj}$ repräsentiert.

Ergänzend sei darauf hingewiesen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. System (2) zum Erzeugen eines Prädiktionssignals u, aufweisend:

> eine Prädiktionseinheit (8),
> **dadurch gekennzeichnet, dass** das System (2) außerdem aufweist:

> > ein bolometrisches Detektorarray (4) mit einer Vielzahl von bolometrischen Messzellen (6),
> > wobei jede bolometrische Messzelle (6) zur Erfassung von Infrarotstrahlung ausgebildet ist,
> > wobei jede bolometrische Messzelle (6) als ein Verzögerungsglied mit einer Zeitkonstante Tau ausgebildet ist, die durch einen thermischen Widerstand der jeweiligen Messzelle (6) und eine thermische Kapazität der jeweiligen Messzelle (6) bestimmt ist, so dass jeder von der jeweiligen Messzelle (6) erzeugte Messwert $m_{i,tj}$ zeitverzögert ist,
> > wobei das Detektorarray (4) ausgebildet ist, an zeitlich aufeinander folgenden Messzeitpunkten $t_j$ jeweils

einen Messdatensatz $M_{tj}$ zu erzeugen, der die Messwerte $m_{i,tj}$ der Messzellen (6) zum jeweiligen Messzeitpunkt $t_j$ repräsentiert,

wobei das System (2) ausgebildet ist, die Messdatensätze $M_{tj}$ zeitlich aufeinander folgend an die Prädiktionseinheit (8) zu übertragen,

wobei die Prädiktionseinheit (8) ausgebildet ist, für jeden empfangenen Messdatensatz $M_{tj}$ einen Differenzdatensatz $D_{tj}$ zu ermitteln, der die Messwertdifferenz der Messwerte zwischen dem jeweiligen empfangenen Messdatensatz $M_{tj}$ und dem zeitlich zuvor empfangenen Messdatensatz $M_{tj-1}$ repräsentiert,

wobei die Prädiktionseinheit (8) ausgebildet ist, für jeden empfangenen Messdatensatz $M_{tj}$ einen jeweiligen Prädiktionsdatensatz $P_{tj}$ basierend auf dem jeweiligen empfangenen Messdatensatz $M_{tj}$, dem dadurch ermittelten Differenzdatensatz $D_{tj}$ und einer die Messzellen (6) repräsentierende Kenngröße derart zu ermitteln, dass der jeweilige Prädiktionsdatensatz $P_{tj}$ für jeden Messwert $m_{i,tj}$ des jeweiligen empfangenen Messdatensatzes $M_{tj}$ einen die Zeitverzögerung kompensierten Vorhersagewert pi,tj repräsentiert, und

wobei die Prädiktionseinheit (8) ausgebildet ist, ein Prädiktionssignal u zu erzeugen, das die zeitlich nacheinander ermittelten Prädiktionsdatensätze $P_{tj}$ repräsentiert.

2. System (2) nach dem vorhergehenden Anspruch, **dadurch gekennzeichnet, dass** die Zeitkonstante Tau die Kenngröße ist oder dass die Kenngröße ein vorbestimmter und/oder auf der Zeitkonstante Tau basierender Wert ist.

3. System (2) nach einem der vorhergehenden Ansprüche, **dadurch gekennzeichnet, dass** das Detektorarray (4) ausgebildet ist, an den zeitlich aufeinander folgenden Messzeitpunkten $t_j$ mit einer Abtastfrequenz von mindestens 20 Hz jeweils einen Messdatensatz $M_{tj}$ zu erzeugen, der die Messwerte mi,tj der Messzellen (6) zum jeweiligen Messzeitpunkt $t_j$ repräsentiert.

4. System (2) nach einem der vorhergehenden Ansprüche, **dadurch gekennzeichnet, dass** die Prädiktionseinheit (8) ausgebildet ist, für jeden empfangenen Messdatensatz $M_{tj}$ mit den Messwerten ($m_{1,tj}$, $m_{2,tj}$ .... $m_{k,tj}$) einen Differenzdatensatz $D_{tj}$ mit den Messwertdifferenzen ($d_{1,tj}$, $d_{2,tj}$ .... $d_{k,tj}$) durch Subtraktion der Messwerte ($m_{1,tj-1}$, $m_{2,tj-1}$ .... $m_{k,tj-1}$) eines zuvor empfangenen Messdatensatzes $M_{tj-1}$ von den Messwerten ($m_{1,tj}$, $m_{2,tj}$ .... $m_{k,tj}$) des jeweils empfangenen Messdatensatz $M_{tj}$ zu ermitteln.

5. System (2) nach dem vorhergehenden Anspruch, **dadurch gekennzeichnet, dass** Prädiktionseinheit (8) ausgebildet ist, basierend auf der Formel

$$p_{i,tj} = m_{i,tj} + Q \bullet ((t_j - t_{j-1}) / Tau) \bullet (1 - V) \bullet (m_{i,tj} - m_{i,tj-1})$$

mit i = 1 ... k

für jeden empfangenen Messdatensatz $M_{tj}$ mit den zum Zeitpunkt $t_j$ erfassten Messwerten ($m_{1,tj}$, $m_{2,tj}$ .... $m_{k,tj}$) einen Prädiktionsdatensatz $P_{tj}$ mit den Prädiktionswerten ($p_{1,tj}$, $p_{2,tj1}$ .... $p_{k,tj}$) unter Berücksichtigung des zuvor empfangenen Messdatensatzes $M_{tj-1}$ mit den zum Zeitpunkt $t_{j-1}$ erfassten Messwerten ($m_{1,tj-1}$, $m_{2,tj-1}$ .... $m_{k,tj-1}$) zu ermitteln, wobei Tau die Zeitkonstante, k die Anzahl der Messwerte des Messdatensatzes, Q ein vorbestimmter Wert, und V ein vorbestimmter Wert zwischen 0,5 und 0,8, insbesondere ein Wert von 0,632, sind.

6. System (2) nach dem vorhergehenden Anspruch, **dadurch gekennzeichnet, dass** Prädiktionseinheit (8) ausgebildet ist, basierend auf der Formel

$$p_{i,t1} = m_{i,t1} - Q \bullet (m_{i,tj} - m_{i,tj-1}) / (e^{-tj/Tau} - e^{-tj-1/Tau}) \bullet e^{-tj/Tau}$$

mit i = 1 ... k

für jeden empfangenen Messdatensatz $M_{t1}$ mit den zum Zeitpunkt t1 erfassten Messwerten ($m_{1,tj}$, $m_{2,tj}$ .... $m_{k,tj}$) einen Prädiktionsdatensatz $P_{tj}$ mit den Prädiktionswerten ($p_{1,tj}$, $p_{2,tj}$ .... $p_{k,tj}$) unter Berücksichtigung des zuvor empfangenen Messdatensatzes $M_{tj-1}$ mit den zum Zeitpunkt t0 erfassten Messwerten ($m_{1,tj-1}$, $m_{2,tj-1}$ .... $m_{k,tj-1}$) zu ermitteln, wobei Tau die Zeitkonstante, k die Anzahl der Messwerte des Messdatensatzes, und Q ein vorbestimmter Wert sind.

7. Wärmebildkamera (10), aufweisend:

ein Gehäuse (12),

ein System (2) nach einem der vorhergehenden Ansprüche,
ein Objektiv (14), und
eine Signalschnittstelle (16),
wobei das System (2) in dem Gehäuse (12) angeordnet ist,
wobei das Objektiv (14) und das bolometrische Detektorarray (4) des Systems (2) derart zueinander angeordnet sind, um Infrarotstrahlung mittels des Objektivs (14) zum Detektorarray (4) zu lenken, und
wobei die Signalschnittstelle (16) zum Übertragen eines Ausgangssignals ausgebildet ist, das auf dem Prädiktionssignal u basiert.

8. Wärmebildkamera (10) nach dem vorhergehenden Anspruch, **gekennzeichnet durch** eine Prozessoreinheit (18), die basierend auf den vom dem Prädiktionssignal u repräsentierten Prädiktionsdatensätzen $P_{tj}$ zur Erzeugung von zeitlich aufeinander folgenden Wärmebildern ausgebildet ist, und wobei die Prozessoreinheit (18) zur Erzeugung des Ausgangssignals ausgebildet ist, so dass das Ausgangssignal eine sequentielle Folge der zeitlich aufeinander folgenden Wärmebilder als Wärmebildvideosignal repräsentiert.

9. Verfahren zum Erzeugen eines Prädiktionssignals u mit einem System (2), das eine Prädiktionseinheit (8) und ein bolometrisches Detektorarray (4) mit einer Vielzahl von bolometrischen Messzellen (6) aufweist, wobei das Verfahren die Schritte aufweist:

a) Erfassen von Infrarotstrahlung mittels jeder bolometrischen Messzelle (6),
b) Erzeugen eines Messsignals mittels jeder bolometrischen Messzelle (6) basierend auf der von der jeweiligen bolometrischen Messzelle (6) erfassten Infrarotstrahlung, wobei jede bolometrische Messzelle (6) als ein Verzögerungsglied mit einer Zeitkonstante Tau ausgebildet ist, die durch einen thermischen Widerstand der jeweiligen Messzelle (6) und eine thermische Kapazität der jeweiligen Messzelle (6) bestimmt ist,
c) Erzeugen jeweils eines Messdatensatzes $M_{tj}$ an zeitlich aufeinander folgenden Messzeitpunkten $t_j$ mittels des Detektorarrays (4),
d) Übertragen der Messdatensätze $M_{tj}$ zeitlich aufeinander folgend an die Prädiktionseinheit (8) mittels des Systems (2),
e) Ermitteln eines Differenzdatensatzes $D_{tj}$ für jeden von der Prädiktionseinheit (8) empfangenen Messdatensatz $M_{tj}$ mittels der Prädiktionseinheit (8), wobei der jeweilige Differenzdatensatz $D_{tj}$ die Messwertdifferenz der Messwerte zwischen dem jeweiligen empfangenen Messdatensatz $M_{tj}$ und dem zeitlich zuvor empfangenen Messdatensatz $M_{tj-1}$ repräsentiert,
f) Ermitteln eines Prädiktionsdatensatz $P_{tj}$ basierend auf dem ermittelten Differenzdatensatz $D_{tj}$, der durch den jeweils empfangenen Messdatensatz $M_{tj}$ ermittelt wurde, und einer Kenngröße mittels der Prädiktionseinheit (8) derart, dass der jeweilige Prädiktionsdatensatz $P_{tj}$ für jeden Messwert mi,tj des jeweiligen empfangenen Messdatensatzes $M_{tj}$ einen die Zeitverzögerung kompensierten Vorhersagewert repräsentiert, und
g) Erzeugen eines Prädiktionssignals u mittels der Prädiktionseinheit (8), das die zeitlich nacheinander ermittelten Prädiktionsdatensätze $P_{tj}$ repräsentiert.

10. Verfahren nach dem vorhergehenden Anspruch, **dadurch gekennzeichnet, dass** die Zeitkonstante Tau die Kenngröße ist oder dass die Kenngröße ein vorbestimmter und/oder auf der Zeitkonstante Tau basierender Wert ist.

11. Verfahren nach einem der vorhergehenden Ansprüche 9 bis 10, **dadurch gekennzeichnet, dass** der Prädiktionsdatensatz $P_{tj}$ in Schritt f) basierend auf dem jeweils empfangenen Messdatensatz $M_{tj}$, dem Differenzdatensatz $D_{tj}$, der durch jeweils empfangenen Messdatensatz $M_{tj}$ ermittelt wurde, und der Kenngröße mittels der Prädiktionseinheit (8) ermittelt wird.

12. Verfahren nach einem der vorhergehenden Ansprüche 9 bis 11, **dadurch gekennzeichnet, dass** in Schritt c) die Erzeugung jeweils eines Messdatensatzes an zeitlich aufeinander folgenden Messzeitpunkten $t_j$ mit einer Abtastfrequenz von mindestens 20 Hz mittels des Detektorarrays (4) erfolgt.

13. Verfahren nach einem der vorhergehenden Ansprüche 9 bis 12, **dadurch gekennzeichnet, dass** in Schritt e) für jeden empfangenen Messdatensatz $M_{tj}$ mit den Messwerten $(m_{1,tj}, m_{2,tj} .... m_{k,tj})$ ein Differenzdatensatz $D_{tj}$ mit den Differenzmessdaten $(d_{1,tj}, d_{2,tj} .... d_{k,tj})$ durch Subtraktion der Messwerte $(m_{1,tj-1}, m_{2,tj-1} .... m_{k,tj-1})$ eines zuvor empfangenen Messdatensatzes $M_{tj-1}$ von den Messwerten $(m_{1,tj}, m_{2,tj} .... m_{k,tj})$ des jeweils empfangenen Messdatensatz $M_{tj}$ ermittelt wird.

14. Verfahren nach einem der vorhergehenden Ansprüche 9 bis 13, **dadurch gekennzeichnet, dass** in Schritt f) basierend auf der Formel

$$p_{i,t1} = m_{i,t1} + Q \bullet ((t1 - to) / Tau) \bullet (1 - V) \bullet (m_{i,t1} - m_{i,to})$$

mit i = 1 ... k

für jeden empfangenen Messdatensatz $M_{tj}$ mit den zum Zeitpunkt $t_j$ erfassten Messwerten ($m_{1,tj}$, $m_{2,tj}$ .... $m_{k,tj}$) ein Prädiktionsdatensatz $P_{tj}$ mit den Prädiktionswerten ($p_{1,tj}$, $p_{2,tj1}$ .... $p_{k,tj}$) unter Berücksichtigung des zuvor empfangenen Messdatensatzes $M_{tj-1}$ mit den zum Zeitpunkt $t_{j-1}$ erfassten Messwerten ($m_{1,t0}$, $m_{2,t0}$ .... $m_{k,t0}$) ermittelt wird, wobei Tau die Zeitkonstante, k die Anzahl der Messwerte des Messdatensatzes, Q ein vorbestimmter Wert, und V ein vorbestimmter Wert zwischen 0,5 und 0,8, insbesondere ein Wert von 0,632, sind.

15. Verfahren nach einem der vorhergehenden Ansprüche 9 bis 14, **dadurch gekennzeichnet, dass** in Schritt f) basierend auf der Formel

$$p_{i,t1} = m_{i,t1} - Q \bullet (m_{i,t1} - m_{i,to}) / (e^{-t1/Tau} - e^{-to/Tau}) \bullet e^{-t1/Tau}$$

mit i = 1 ... k

für jeden empfangenen Messdatensatz $M_{t1}$ mit den zum Zeitpunkt t1 erfassten Messwerten ($m_{1,tj}$, $m_{2,tj}$ .... $m_{k,tj}$) ein Prädiktionsdatensatz $P_{t1}$ mit den Prädiktionswerten ($p_{1,tj}$, $p_{2,tj1}$ .... $p_{k,tj}$) unter Berücksichtigung des zuvor empfangenen Messdatensatzes $M_{t0}$ mit den zum Zeitpunkt t0 erfassten Messwerten ($m_{1,tj-1}$, $m_{2,tj-1}$ .... $m_{k,tj-1}$) ermittelt wird, wobei Tau die Zeitkonstante, k die Anzahl der Messwerte des Messdatensatzes, und Q ein vorbestimmter Wert sind.

## Claims

1. A system (2) for generating a prediction signal u, having:

    a prediction unit (8),
    **characterized in that** the system (2) also has:

        a bolometric detector array (4) having a plurality of bolometric measuring cells (6),
        wherein each bolometric measuring cell (6) is designed to detect infrared radiation,
        wherein each bolometric measuring cell (6) is designed as a delay element with a time constant tau, which is determined by a thermal resistance of the respective measuring cell (6) and a thermal capacity of the respective measuring cell (6), so that each measured value $m_{i,tj}$ generated by the respective measuring cells (6) is time delayed,
        wherein the detector array (4) is designed to generate a measurement data set $M_{tj}$ at temporally consecutive measurement times $t_j$, which represents the measured values $m_{i,tj}$ of the measuring cells (6) at the respective measurement time $t_j$,
        wherein the system (2) is designed to transmit the measurement data sets $M_{tj}$ temporally consecutively to the prediction unit (8),
        wherein the prediction unit (8) is designed to determine a difference data set $D_{tj}$ for each received measurement data set $M_{tj}$, which represents the measured value difference of the measured values between the respective received measurement data set $M_{tj}$ and the temporally previously received measurement data set $M_{tj-1}$,
        wherein the prediction unit (8) is designed to determine a respective prediction data set $P_{tj}$ for each received measurement data set $M_{tj}$ based on the respective received measurement data set $M_{tj}$, the difference data set $D_{tj}$ determined thereby, and a characteristic variable representing the measuring cells (6) in such a way that the respective prediction data set $P_{tj}$ represents a time delay-compensated prediction value $p_{i,tj}$ for each measured value $m_{i,tj}$ of the respective received measurement data set $M_{tj}$, and
        wherein the prediction unit (8) is designed to generate a prediction signal u which represents the prediction data sets $P_{tj}$ determined temporally consecutively one after the other.

2. The system (2) according to the preceding claim, **characterized in that** the time constant tau is the characteristic variable or that the characteristic variable is a predetermined value and/or based on the time constant tau.

3.  The system (2) according to any one of the preceding claims, **characterized in that** the detector array (4) is designed to generate a measurement data set $M_{tj}$ at the temporally consecutive measurement times $t_j$ with a sampling frequency of at least 20 Hz, which represents the measured values $m_{i,tj}$ of the measuring cells (6) at the respective measuring time $t_j$.

4.  The system (2) according to any one of the preceding claims, **characterized in that** the prediction unit (8) is designed to provide each received measurement data set $M_{tj}$ having the measured values ($m_{1,tj}$, $m_{2,tj}$.... $m_{k,tj}$) with a difference data set $D_{tj}$ having the measured value differences ($d_{1,tj}$, $d_{2,tj}$.... $d_{k,tj}$) by subtracting the measured values ($m_{1,tj-1}$, $m_{2,tj-1}$.... $m_{k,tj-1}$) of a previously received measurement data set $M_{tj-1}$ from the measured values ($m_{1,tj}$, $m_{2,tj}$.... $m_{k,tj}$) of the respectively received measurement data set $M_{tj}$.

5.  The system (2) according to the preceding claim, **characterized in that** the prediction unit (8) is designed to determine, based on the formula

$$p_{i,tj} = m_{i,tj} + Q \bullet ((t_j - t_{j-1})/tau) \bullet (1 - V) \bullet (m_{i,tj} - m_{i,tj-1})$$

    with i = 1...k
    for each received measurement data set $M_{tj}$ having the measured values recorded at time $t_j$ ($m_{1,tj}$, $m_{2,tj}$.... $m_{k,tj}$), a prediction data set $P_{tj}$ having the prediction values ($p_{1,tj}$, $p_{2,tj1}$.... $p_{k,tj}$) taking into account the previously received measurement data set $M_{tj-1}$ having the measured values recorded at time $t_{j-1}$ ($m_{1,tj-1}$, $m_{2,tj-1}$,.... $m_{k,tj-1}$), where tau is the time constant, k is the number of measured values of the measurement data set, Q is a predetermined value, and V is a predetermined value between 0.5 and 0.8, in particular a value of 0.632.

6.  The system (2) according to the preceding claim, **characterized in that** the prediction unit (8) is designed to determine, based on the formula

$$p_{i,t1} = m_{i,t1} - Q \bullet (m_{i,tj} - m_{i,tj-1})/(e^{-tj/tau} - e^{-tj-1/tau}) \bullet e^{-tj/tau}$$

    with i = 1...k
    for each received measurement data set $M_{t1}$ having the measured values ($m_{1,tj}$, $m_{2,tj}$.... $m_{k,tj}$) recorded at time t1, a prediction data set $P_{tj}$ having the prediction values ($p_{1,tj}$, $p_{2,tj}$.... $p_{k,tj}$) taking into account the previously received measurement data set $M_{tj-1}$ having the measured values recorded at time t0 ($m_{1,tj-1}$, $m_{2,tj-1}$.... $m_{k,tj-1}$), where tau is the time constant, k is the number of measured values of the measurement data set, and Q is a predetermined value.

7.  A thermal imaging camera (10), having:

    a housing (12),
    a system (2) according to any one of the preceding claims,
    a lens (14), and
    a signal interface (16),
    the system (2) being arranged in the housing (12),
    the lens (14) and the bolometric detector array (4) of the system (2) being arranged relative to one another in order to direct infrared radiation to the detector array (4) by means of the lens (14), and
    the signal interface (16) being designed to transmit an output signal that is based on the prediction signal u.

8.  The thermal imaging camera (10) according to the preceding claim, **characterized by** a processor unit (18) which is designed to generate temporally consecutive thermal images based on the prediction data sets $P_{tj}$ represented by the prediction signal u, and wherein the processor unit (18) is designed to generate the output signal is designed so that the output signal represents a sequential sequence of the temporally consecutive thermal images as a thermal image video signal.

9.  A method for generating a prediction signal u with a system (2) which has a prediction unit (8) and a bolometric detector array (4) with a plurality of bolometric measuring cells (6), the method having the steps:

    a) detecting infrared radiation using each bolometric measuring cell (6),
    b) generating a measurement signal by means of each bolometric measuring cell (6) based on the infrared radiation detected by the respective bolometric measuring cell (6), each bolometric measuring cell (6) being designed as a delay element with a time constant tau, which is determined by a thermal resistance of the respective measuring cell (6) and a thermal capacity of the respective measuring cell (6),

c) generating a measurement data set $M_{tj}$ at temporally consecutive measurement times $t_j$ using the detector array (4),

d) transmitting the measurement data sets $M_{tj}$ temporally consecutively to the prediction unit (8) by means of the system (2),

e) determining a difference data set $D_{tj}$ for each measurement data set $M_{tj}$ received by the prediction unit (8) by means of the prediction unit (8), the respective difference data set $D_{tj}$ representing the measured value difference of the measured values between the respective received measurement data set $M_{tj}$ and the temporally previously received measurement data set $M_{tj-1}$,

f) determining a prediction data set $P_{tj}$ based on the determined difference data set $D_{tj}$, which was determined by the respectively received measurement data set $M_{tj}$, and a characteristic variable by means of the prediction unit (8) such that the respective prediction data set $P_{tj}$ for each measured value $m_{i,tj}$ of the respective received measurement data set $M_{tj}$ represents a time delay-compensated prediction value, and

g) generating a prediction signal u by means of the prediction unit (8), which represents the prediction data sets $P_{tj}$ determined temporally consecutively.

10. The method according to the preceding claim, **characterized in that** the time constant tau is the characteristic variable or that the characteristic variable is a predetermined value and/or is based on the time constant tau.

11. The method according to any one of the preceding claims 9 through 10, **characterized in that** the prediction data set $P_{tj}$ in step f) is based on the respectively received measurement data set $M_{tj}$, the difference data set $D_{tj}$ which was determined by the respectively received measurement data set $M_{tj}$, and the parameter by means of which the prediction unit (8) is determined.

12. The method according to any one of the preceding claims 9 through 11, **characterized in that** in step c) the generation of a measurement data set at temporally consecutive measurement times $t_j$ with a sampling frequency of at least 20 Hz by means of the detector array (4) is conducted.

13. The method according to any one of the preceding claims 9 to 12, **characterized in that** in step e) for each received measurement data set $M_{tj}$ having the measured values ($m_{1,tj}$, $m_{2,tj}$.... $m_{k,tj}$), a difference data set $D_{tj}$ having the difference measurement data ($d_{1,tj}$, $d_{2,tj}$.... $d_{k,tj}$) is determined by subtracting the measured values ($m_{1,tj-1}$, $m_{2,tj-1}$.... $m_{k,tj-1}$) of a previously received measurement data set $M_{tj-1}$ from the measured values ($m_{1,tj}$, $m_{2,tj}$.... $m_{k,tj}$) of the respectively received measurement data set $M_{tj}$.

14. The method according to any one of the preceding claims 9 through 13, **characterized in that** in step f), based on the formula

$$p_{i,t1} = m_{i,t1} + Q \bullet ((t1 - t0)/tau) \bullet (1 - V) \bullet (m_{i,t1} - m_{i,t0})$$

with i = 1...k

for each received measurement data set $M_{tj}$ having the measured values ($m_{1,tj}$, $m_{2,tj}$.... $m_{k,tj}$) recorded at time $t_j$, a prediction data set $P_{tj}$ with the prediction values ($p_{1,tj}$, $p_{2,tj1}$... $p_{k,tj}$) is determined taking into account the previously received measurement data set $M_{tj-1}$ having the measured values ($m_{1,t0}$, $m_{2,t0}$.... $m_{k,t0}$) recorded at time $t_{j-1}$, wherein tau is the time constant, k is the number of measured values of the measurement data set, Q is a predetermined value, and V is a predetermined value between 0.5 and 0.8, in particular a value of 0.632.

15. The method according to any one of the preceding claims 9 through 14, **characterized in that** in step f), based on the formula

$$p_{i,t1} = m_{i,t1} - Q \bullet (m_{i,t1} - m_{i,t0})/(e^{-t1/tau} - e^{-t0/tau}) \bullet e^{-t1/tau}$$

with i = 1...k

for each received measurement data set $M_{t1}$ having the measured values ($m_{1,tj}$, $m_{2,tj}$.... $m_{k,tj}$) recorded at time t1, a prediction data set $P_{t1}$ with the prediction values ($p_{1,tj}$, $p_{2,tj1}$.... $p_{k,tj}$) is determined taking into account the previously received measurement data set $M_{t0}$ having the measured values ($m_{1,tj-1}$, $m_{2,tj-1}$.... $m_{k,tj-1}$) recorded at time t0, wherein tau is the time constant, k is the number of measured values of the measurement data set, and Q is a predetermined value.

## Revendications

1. Système (2) destiné à générer un signal de prédiction u, présentant :

    une unité de prédiction (8),
    **caractérisé en ce que** le système (2) présente en outre :

    un réseau de détecteurs bolométriques (4) comportant une pluralité de cellules de mesure bolométriques (6), dans lequel chaque cellule de mesure bolométrique (6) est conçue pour détecter un rayonnement infrarouge, dans lequel chaque cellule de mesure bolométrique (6) est conçue comme élément de temporisation avec une constante de temps Tau qui est déterminée par une résistance thermique de la cellule de mesure (6) respective et une capacité thermique de la cellule de mesure (6) respective, de sorte que chaque valeur de mesure $m_{i,tj}$ générée par les cellules de mesure (6) respectives est temporisée, dans lequel le réseau de détecteurs (4) est conçu pour générer un ensemble de données de mesure $M_{tj}$ à des instants de mesure successifs dans le temps $t_j$, qui représente les valeurs de mesures $m_{i,tj}$ des cellules de mesure (6) à l'instant de mesure respectif $t_j$, dans lequel le système (2) est conçu pour transmettre successivement les ensembles de données de mesure $M_{tj}$ à l'unité de prédiction (8), dans lequel l'unité de prédiction (8) est conçue pour déterminer un ensemble de données différentielles $D_{tj}$ pour chaque ensemble de données de mesure $M_{tj}$ reçu, qui représente la différence de valeurs de mesure entre l'ensemble de données de mesure reçu respectif $M_{tj}$ et le précédent ensemble de données de mesure reçu $M_{tj-1}$, dans lequel l'unité de prédiction (8) est conçue pour déterminer un ensemble de données de prédiction respectif $P_{tj}$ pour chaque ensemble de données de mesure $M_{tj}$ reçu d'après l'ensemble de données de mesure reçu respectif $M_{tj}$, l'ensemble de données différentielles $D_{tj}$ ainsi déterminé et une variable caractéristique représentant les cellules de mesure (6) de telle sorte que l'ensemble de données de prédiction respectif $P_{tj}$ représente une valeur de prédiction $p_{i,tj}$ compensée par un retard pour chaque valeur de mesure $m_{i,tj}$ de l'ensemble de données de mesure reçu respectif $M_{tj}$, et dans lequel l'unité de prédiction (8) est conçue pour générer un signal de prédiction u qui représente les ensembles de données de prédiction $P_{tj}$ déterminés de manière successive.

2. Système (2) selon la revendication précédente, **caractérisé en ce que** la constante de temps Tau est la variable caractéristique ou que la variable caractéristique est une valeur prédéterminée et/ou basée sur la constante de temps Tau.

3. Système (2) selon l'une des revendications précédentes, **caractérisé en ce que** le réseau de détecteurs (4) est conçu pour générer aux instants de mesure successifs dans le temps $t_j$ un ensemble de données de mesure $M_{tj}$ respectif avec une fréquence d'échantillonnage d'au moins 20 Hz, qui représente les valeurs de mesures $m_{i,tj}$ des cellules de mesure (6) à l'instant de mesure $t_j$ respectif.

4. Système (2) selon l'une des revendications précédentes, **caractérisé en ce que** l'unité de prédiction (8) est conçue pour générer un ensemble de données différentielles $D_{tj}$ avec les différences de valeurs de mesure ($d_{1,tj}$, $d_{2,tj}$ .... $d_{k,tj}$) en soustrayant les valeurs de mesure ($m_{1,tj-1}$, $m_{2,tj-1}$ .... $m_{k,tj-1}$) d'un ensemble de données de mesure $M_{tj-1}$ précédemment reçu à partir des valeurs de mesure ($m_{1,tj}$, $m_{2,tj}$ .... $m_{k,tj}$) de l'ensemble de données de mesure $M_{tj}$ respectivement reçu pour chaque ensemble de données de mesure reçu $M_{tj}$ avec les valeurs de mesure ($m_{1,tj}$, $m_{2,tj}$ .... $m_{k,tj}$).

5. Système (2) selon la revendication précédente, **caractérisé en ce que** l'unité de prédiction (8) est conçue d'après la formule

$$p_{i,tj} = m_{i,tj} + Q \bullet ((t_j - t_{j-1})/Tau) \bullet (1-V) \bullet (m_{i,tj} - m_{i,tj-1})$$

où i = 1 ... k

pour déterminer un ensemble de données de prédiction $P_{tj}$ pour chaque ensemble de données de mesure reçu $M_{tj}$ avec les valeurs de mesure détectées à l'instant $t_j$ ($m_{1,tj}$, $m_{2,tj}$ .... $m_{k,tj}$) avec les valeurs de prédiction ($p_{1,tj}$, $p_{2,tj1}$ .... $p_{k,tj}$) en tenant compte de l'ensemble de données de mesure $M_{tj-1}$ précédemment reçu avec les valeurs de mesure détectées à l'instant $t_{j-1}$ ($m_{1,tj-1}$, $m_{2,tj-1}$, .... $m_{k,tj-1}$), dans lequel Tau est la constante de temps, k est le nombre de valeurs de mesure de l'ensemble de données de mesure, Q est une valeur prédéterminée, et V est une valeur prédéterminée comprise entre 0,5 et 0,8, particulièrement une valeur de 0,632.

6. Système (2) selon la revendication précédente, **caractérisé en ce que** l'unité de prédiction (8) est conçue d'après la formule

$$p_{i,t1} = m_{i,t1} - Q \bullet (m_{i,tj} - m_{i,tj-1})/(e^{-tj/Tau} - e^{-tj-1/Tau}) \bullet e^{-tj/Tau}$$

où i = 1 ... k

pour déterminer un ensemble de données de prédiction $P_{tj}$ pour chaque ensemble de données de mesure reçu $M_{t1}$ avec les valeurs de mesure détectées à l'instant t1 ($m_{1,tj}$, $m_{2,tj}$ .... $m_{k,tj}$) avec les valeurs de prédiction ($p_{1,tj}$, $p_{2,tj}$ .... $p_{k,tj}$) en tenant compte de l'ensemble de données de mesure $M_{tj-1}$ précédemment reçu avec les valeurs de mesure détectées à l'instant t0 ($m_{1,tj-1}$, $m_{2,tj-1}$ .... $m_{k,tj-1}$), dans lequel Tau est la constante de temps, k est le nombre de valeurs de mesure de l'ensemble de données de mesure et Q est une valeur prédéterminée.

7. Caméra d'imagerie thermique (10) présentant :

un boîtier (12),
un système (2) selon l'une des revendications précédentes,
une lentille (14), et
une interface de signal (16),
dans laquelle le système (2) est agencé dans le boîtier (12),
dans laquelle la lentille (14) et le réseau de détecteurs bolométriques (4) du système (2) sont agencés l'un par rapport à l'autre afin de diriger le rayonnement infrarouge vers le réseau de détecteurs (4) au moyen de la lentille (14), et
dans laquelle l'interface de signal (16) est conçue pour transmettre un signal de sortie qui est basé sur le signal de prédiction u.

8. Caméra d'imagerie thermique (10) selon la revendication précédente, **caractérisée par** une unité de processeur (18) qui est conçue pour générer des images thermiques successives dans le temps d'après les ensembles de données de prédiction $P_{tj}$ représentés par le signal de prédiction u, et dans laquelle l'unité de processeur (18) est conçue pour générer le signal de sortie de telle sorte que le signal de sortie représente séquentiellement des images thermiques successives sous la forme d'un signal vidéo d'image thermique.

9. Procédé destiné à générer un signal de prédiction u avec un système (2) qui présente une unité de prédiction (8) et un réseau de détecteurs bolométriques (4) comportant une pluralité de cellules de mesure bolométriques (6), le procédé comprenant les étapes suivantes :

a) Détection de rayonnement infrarouge au moyen de chaque cellule de mesure bolométrique (6),
b) Génération d'un signal de mesure au moyen de chaque cellule de mesure bolométrique (6) d'après le rayonnement infrarouge détecté par la cellule de mesure bolométrique (6) respective, chaque cellule de mesure bolométrique (6) étant conçue comme un élément de temporisation avec une constante de temps Tau, qui est déterminée par une résistance thermique de la cellule de mesure (6) respective et une capacité thermique de la cellule de mesure (6) respective,
c) Génération d'un ensemble de données de mesure $M_{tj}$ à des instants de mesure successifs dans le temps $t_j$ au moyen du réseau de détecteurs (4),
d) Transmission un à la suite de l'autre des ensembles de données de mesure $M_{tj}$ à l'unité de prédiction (8) au moyen du système (2),
e) Détermination d'un ensemble de données différentielles $D_{tj}$ pour chaque ensemble de données de mesure $M_{tj}$ reçu par l'unité de prédiction (8) au moyen de l'unité de prédiction (8), l'ensemble de données différentielles respectif $D_{tj}$ représentant la différence de valeur de mesure entre l'ensemble de données de mesure reçu respectif $M_{tj}$ et l'ensemble de données de mesure reçu précédemment $M_{tj-1}$,

f) Détermination d'un ensemble de données de prédiction $P_{tj}$ d'après l'ensemble de données différentielles déterminé $D_{tj}$, qui a été déterminé par l'ensemble de données de mesure respectivement reçu $M_{tj}$, et une variable caractéristique au moyen de l'unité de prédiction (8) de telle sorte que l'ensemble de données de prédiction respectif $P_{tj}$ pour chaque valeur de mesure $m_{i,tj}$ de l'ensemble de données de mesure reçu respectif $M_{tj}$ représente une valeur de prédiction compensant la temporisation, et

g) Génération d'un signal de prédiction u au moyen de l'unité de prédiction (8), qui représente les ensembles de données de prédiction $P_{tj}$ déterminés les uns après les autres.

**10.** Procédé selon la revendication précédente, **caractérisé en ce que** la constante de temps Tau est la variable caractéristique ou que la variable caractéristique est une valeur prédéterminée et/ou basée sur la constante de temps Tau.

**11.** Procédé selon l'une des revendications précédentes 9 à 10, **caractérisé en ce que** l'ensemble de données de prédiction $P_{tj}$ est déterminé à l'étape f) d'après l'ensemble de données de mesure $M_{tj}$ respectivement reçu, de l'ensemble de données différentielles $D_{tj}$, qui a été déterminé par l'ensemble de données de mesure reçu respectivement $M_{tj}$, et de la variable caractéristique au moyen de l'unité de prédiction (8).

**12.** Procédé selon l'une des revendications précédentes 9 à 11, **caractérisé en ce qu'**un ensemble de données de mesure est respectivement généré à l'étape c) à des instants de mesure successifs dans le temps $t_j$ avec une fréquence d'échantillonnage d'au moins 20 Hz au moyen du réseau de détecteurs (4).

**13.** Procédé selon l'une des revendications précédentes 9 à 12, **caractérisé en ce qu'**un ensemble de données de différence $D_{tj}$ avec les données de mesure de différence $(d_{1,tj}, d_{2,tj} .... d_{k,tj})$ est déterminé à l'étape e) pour chaque ensemble de données de mesure reçu $M_{tj}$ avec les valeurs de mesure $(m_{1,tj}, m_{2,tj} .... m_{k,tj})$, en soustrayant les valeurs de mesure $(m_{1,tj-1}, m_{2,tj-1} .... m_{k,tj-1})$ d'un ensemble de données de mesure précédemment reçu $M_{tj-1}$ à partir des valeurs de mesure $(m_{1,tj}, m_{2,tj} .... m_{k,tj})$ de l'ensemble de données de mesure $M_{tj}$ respectivement reçu.

**14.** Procédé selon l'une des revendications précédentes 9 à 13, **caractérisé en ce qu'**un ensemble de données de prédiction Ptj avec les valeurs de prédiction $(p_{1,tj}, p_{2,tj1} .... p_{k,tj})$ est déterminé à l'étape f) d'après la formule

$$p_{i,t1} = m_{i,t1} + Q \bullet ((t1 - t0)/\text{Tau}) \bullet (1 - V) \bullet (m_{i,t1} - m_{i,t0})$$

où i = 1 ...k

pour chaque ensemble de données de mesure reçu $M_{tj}$ avec les valeurs de mesure détectées à l'instant $t_j$ ($m_{1,tj}$, $m_{2,tj} .... m_{k,tj}$) en tenant compte de l'ensemble de données de mesure $M_{tj-1}$ précédemment reçu avec les valeurs de mesure $(m_{1,t0}, m_{2,t0} .... m_{k,t0})$ détectées à l'instant $t_{j-1}$, Tau étant la constante de temps, k le nombre de valeurs de mesure de l'ensemble de données de mesure, Q une valeur prédéterminée et V une valeur prédéterminée entre 0,5 et 0,8, notamment une valeur de 0,632.

**15.** Procédé selon l'une des revendications précédentes 9 à 14, **caractérisé en ce qu'**un ensemble de données de prédiction $P_{t1}$ avec les valeurs de prédiction $(p_{1,tj}, p_{2,tj1} .... p_{k,tj})$ est déterminé à l'étape f) d'après la formule

$$p_{i,t1} = m_{i,t1} - Q \bullet (m_{i,t1} - m_{i,t0})/(e^{-t1/\text{Tau}} - e^{-t0/\text{Tau}}) \bullet e^{-t1/\text{Tau}}$$

oùi = 1... k

pour chaque ensemble de données de mesure reçu $M_{t1}$ avec les valeurs de mesure détectées à l'instant t1 ($m_{1,tj}$, $m_{2,tj} .... m_{k,tj}$), en tenant compte de l'ensemble de données de mesure $M_{t0}$ précédemment reçu avec les valeurs de mesure $(m_{1,tj-1}, m_{2,tj-1} .... m_{k,tj-1})$ détectées à l'instant t0, Tau étant la constante de temps, k le nombre de valeurs de mesure de l'ensemble de données de mesure et Q une valeur prédéterminée.

Fig. 3

$m/m_{max}$

99%

63,2%

Tau  2Tau  3Tau  4Tau  5Tau

$t_j$

Fig. 1

2

8

U

4

Fig. 2

4

6

$M_{t1}$

| $m_{1,t0}$ | $m_{2,t0}$ | $m_{3,t0}$ |
|---|---|---|
| $m_{4,t0}$ | $m_{5,t0}$ | $m_{6,t0}$ |
| $m_{7,t0}$ | $m_{8,t0}$ | $m_{9,t0}$ |

Fig. 4

$M_{t1}$

| $m_{1,t1}$ | $m_{2,t1}$ | $m_{3,t1}$ |
|---|---|---|
| $m_{4,t1}$ | $m_{5,t1}$ | $m_{6,t1}$ |
| $m_{7,t1}$ | $m_{8,t1}$ | $m_{9,t1}$ |

Fig. 5

$P_{t1}$

| $p_{1,t1}$ | $p_{2,t1}$ | $p_{3,t1}$ |
|---|---|---|
| $p_{4,t1}$ | $p_{5,t1}$ | $p_{6,t1}$ |
| $p_{7,t1}$ | $p_{8,t1}$ | $p_{9,t1}$ |

Fig. 7

$D_{t0}$

| $d_{1,t1} = m_{1,t1} - m_{1,t0}$ | $d_{2,t1} = m_{2,t1} - m_{2,t0}$ | $d_{3,t1} = m_{3,t1} - m_{3,t0}$ |
| --- | --- | --- |
| $d_{4,t1} = m_{4,t1} - m_{4,t0}$ | $d_{5,t1} = m_{5,t1} - m_{5,t0}$ | $d_{6,t1} = m_{6,t1} - m_{6,t0}$ |
| $d_{7,t1} = m_{7,t1} - m_{7,t0}$ | $d_{8,t1} = m_{8,t1} - m_{8,t0}$ | $d_{9,t1} = m_{9,t1} - m_{9,t0}$ |

Fig. 6

Fig. 8

EP 3 789 743 B1

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0964231 A2
- DE 3605501 A1
- US 4727500 A

- US 20020003832 A1
- US 20160044306 A1
- US 20080302956 A1